# EUROPEAN PATENT APPLICATION

(11) **EP 2 731 170 A1**
(43) Date of publication of application: **14.05.2014**
(21) Application number: 12807938.1
(22) Date of filing: 05.07.2012
(51) Int. Cl.: H01M 2/16, C08F 220/12, H01M 10/0566

(54) **POROUS MEMBRANE FOR SECONDARY BATTERY, SEPARATOR FOR SECONDARY BATTERY, AND SECONDARY BATTERY**

(30) Priority: 06.07.2011 JP 2011150006
(71) Applicant: Zeon Corporation, Tokyo 100-8246 (JP)
(72) Inventor: TOYODA, Yujiro, Tokyo 100-8246 (JP)
(74) Representative: Vossius & Partner
(86) International application number: PCT/JP2012/067198
(87) International publication number: WO 2013/005796

(57) **Abstract**

In a porous membrane for a secondary battery including non-conductive particles and a water-soluble polymer, as the water-soluble polymer, a copolymer including 15% to 50% by weight of an ethylenically unsaturated carboxylic acid monomer unit, 30% to 80% by weight of a (meth)acrylic acid ester monomer unit, and 0.5% to 10% by weight of a fluorine-containing (meth)acrylic acid ester monomer unit is used.

## Description

### Field

The present invention relates to a porous membrane for a secondary battery, and a separator for a secondary battery and a secondary battery each including the same.

### Background

Lithium secondary batteries have a high energy density among practical batteries and have been often used particularly for small sized electronics. Lithium secondary batteries are also expected to be developed for automobiles as well as for small sized applications. Such lithium secondary batteries generally include a positive electrode and a negative electrode each containing an electrode material layer (also referred to as an electrode active material layer) supported on a current collector, a separator, and a non-aqueous electrolyte solution. The electrode material layer usually includes an electrode active material having an average particle diameter of about 5 µm to 50 µm and a binding agent for an electrode material layer.

The electrode material layers of the positive electrode and negative electrode are usually produced by coating the current collector with a slurry composition containing an electrode active material powders and a solvent, and then removing the solvent by drying. Further, as a separator for separating the positive electrode and the negative electrode, a very thin separator having a thickness of about 10 µm to 50 µm is usually used. In addition, lithium secondary batteries are produced by processes such as a process of stacking the electrode and the separator, and a cutting process of cutting the electrode into a certain shape.

During such a series of production processes, however, the electrode active material falls off the electrode material layer and part of the fallen electrode active material may be contained in the battery as a foreign matter. Such a foreign matter has a particle diameter of about 5 µm to 50 µm and this particle diameter is similar to the thickness of the separator. Accordingly, the foreign matter passes through the separator in the assembled battery and may cause a short circuit.

Battery operation generally involves heat generation. Consequently, a separator made of a stretched resin such as a stretched polyethylene resin is also heated. The separator made of a stretched resin easily shrinks even at a temperature of about 150°C or lower and easily causes a short circuit of the battery. When a sharp projection such as a nail pierces through the battery (for example, in the nail-piercing test), a short circuit tends to immediately occur to generate heat of reaction and enlarge the short-circuited part.

In order to solve the aforementioned problems, it has been proposed that a porous membrane for a secondary battery containing non-conductive particles such as an inorganic filler is provided on the surface of a separator or inside the separator. The porous membrane provided on the separator reinforces the strength of the separator and improves the safety.

As such techniques for the aforementioned porous membrane, e.g., techniques as described in Patent Literatures 1 and 2 are known.

### Citation List

### Patent Literature

Patent Literature 1: International Publication No. WO 2009/96528
Patent Literature 2: International Publication No. WO 2009/123168

### Summary

### Technical Problem

Conventionally, an organic solvent has been usually used as a solvent for a slurry composition for producing an electrode material layer. However, a production method using an organic solvent has a problem of cost required for recycling the organic solvent, and a problem of necessity of ensuring the safety for using the organic solvent. Accordingly, a production method using water as a solvent has been studied in recent years.

In general, when water is contained in a lithium secondary battery, water may be subjected to electrolysis to generate a gas. Accordingly, when water is used as a solvent, usually, a slurry composition is applied onto a current collector and water is thoroughly removed by drying to produce an electrode. In order to further suppress water residue in lithium secondary batteries, there has been an attempt to perform operations, such as insertion of battery components into a casing, in a dry room. Specifically, the following has been attempted: preparing battery components such as electrodes, a separator, and an electrolyte solution; thoroughly removing water from these battery components by drying; then transferring the battery components to a well-dried dry room; and assembling a battery in the dry room.

A separator having a porous membrane, however, may deform when transferred from outside the dry room to inside the dry room. Specifically, the separator may have curled when transferred to the dry room. Such curling raises a risk of reducing workability of battery production. For this reason, it is desired to develop a technique for suppressing such curling.

In addition, an internal stress generated by the curling may cause the porous membrane to peel off the separator. Accordingly, it is also desired to increase the adhesion strength of the porous membrane to the separator.

The present invention has been made in the light of the aforementioned problems and an object of the invention is to provide a porous membrane for a secondary battery that has low tendency to cause curling when it is transferred from outside to inside a dry room and has high adhesion strength to a separator, and a separator for a secondary battery and a secondary battery each including such a porous membrane for a secondary battery.

### Solution to Problem

As a result of intensive studies to solve the aforementioned problems, the present inventors have found out that: change in moisture amount contained in a porous membrane for a secondary battery is one of factors responsible for the curling; a copolymer that is a combination of specific monomer units has water solubility, has excellent binding strength, and has a nature of easily releasing water; and when such a copolymer is used for the porous membrane, sufficient reduction of the moisture amount before transferring the porous membrane to the dry room results in suppression of curling. The present invention has thus been completed.

Specifically, the present invention is as follows.
(1) A porous membrane for a secondary battery, comprising non-conductive particles and a water-soluble polymer, wherein
   the water-soluble polymer is a copolymer including 15% to 50% by weight of an ethylenically unsaturated carboxylic acid monomer unit, 30% to 80% by weight of a (meth)acrylic acid ester monomer unit, and 0.5% to 10% by weight of a fluorine-containing (meth)acrylic acid ester monomer unit.
(2) The porous membrane for a secondary battery according to (1), wherein
   a moisture amount "owl" of the porous membrane when the porous membrane is stored in a constant-temperature constant-humidity chamber (temperature: 25°C, humidity: 50%) for a day and
   a moisture amount "W2" of the porous membrane when the porous membrane is stored in a dry room (dew point: -60°C, humidity: 0.05%) for a day
   satisfy a relationship of W1/W2 ≤ 2.5.
(3) The porous membrane for a secondary battery according to (1) or (2), further comprising a binding agent having a glass transition temperature of -50°C to -20°C.
(4) The porous membrane for a secondary battery according to (3), wherein the binding agent is a copolymer including a (meth)acrylonitrile monomer unit and a (meth)acrylic acid ester monomer unit.
(5) The porous membrane for a secondary battery according to (4), wherein a weight ratio represented by " the (meth)acrylonitrile monomer unit / the (meth)acrylic acid ester monomer unit" of the copolymer included in the binding agent is from 1/99 to 30/70.
(6) The porous membrane for a secondary battery according to any one of (1) to (5), wherein the ethylenically unsaturated carboxylic acid monomer of the water-soluble polymer is an ethylenically unsaturated monocarboxylic acid monomer.
(7) The porous membrane for a secondary battery according to any one of (1) to (6), wherein a 1% by weight aqueous solution of the water-soluble polymer has a viscosity of 0.1 mPa·s to 20,000 mPa·s.
(8) A separator for a secondary battery, comprising:
   an organic separator; and
   the porous membrane according to any one of (1) to (7), formed on a surface of the organic separator.
(9) A secondary battery comprising a positive electrode, a negative electrode, a separator, and an electrolyte solution, wherein
   the separator is the separator for a secondary battery according to (8).

### Advantageous Effects of Invention

According to the present invention, it is possible to realize a porous membrane for a secondary battery that has low tendency to cause curling when it is transferred from outside to inside a dry room and has high adhesion strength to a separator, and a separator for a secondary battery and a secondary battery each including such a porous membrane for a secondary battery.

### Description of Embodiments

The present invention will be described hereinbelow in detail by illustrating embodiments and exemplifications, but the present invention is not limited to the following embodiments and exemplifications and may be arbitrarily modified and practiced without departing from the scope of claims of the present invention and the scope of their equivalents. In the following description, (meth)acrylic acid means acrylic acid and methacrylic acid. (Meth)acrylonitrile means acrylonitrile and methacrylonitrile. In addition, a substance being water-soluble means that, when 0.5 g of the substance is dissolved in 100 g of water at 25°C, less than 0.5% by weight of the substance remains insoluble. On the other hand, a substance being water-insoluble means that, when 0.5 g of the substance is dissolved in 100 g of water at 25°C, more than 90% by weight of the substance remains insoluble.

### [1. Porous Membrane for Secondary Battery]

A porous membrane for a secondary battery according to the present invention (it may be referred to hereinbelow as a "porous membrane according to the present invention") is a membrane containing non-conductive particles and a water-soluble polymer. The porous membrane according to the present invention may further contain a binding agent for a porous membrane.

### [1-1. Non-Conductive Particles]

Non-conductive particles are those forming a porous structure of the porous membrane according to the present invention. Usually, pore spaces between non-conductive particles serve as pores of the porous membrane according to the present invention.

As the non-conductive particles, inorganic particles may be used, and organic particles may be used.

Inorganic particles have excellent dispersion stability in a solvent, have low tendency to cause precipitation in a slurry composition for producing the porous membrane according to the present invention (the slurry may be referred to hereinbelow as a "slurry composition for a porous membrane"), and can thus maintain a uniform slurry state for a long period of time. In particular, materials having electrochemical stability and suitable for preparing the slurry composition for a porous membrane by mixing with a water-soluble polymer are preferable as materials for the non-conductive particles. Enumerating preferred examples for inorganic materials for the non-conductive particles from such viewpoints, the examples may include particles of oxides such as aluminum oxide (alumina), aluminum oxide hydrates (boehmite (A100H), Gibbsite (Al(OH)₃)), silicon oxide, magnesium oxide (magnesia), magnesium hydroxide, calcium oxide, titanium oxide (titania), BaTiO₃, ZrO, and an alumina-silica complex oxide; nitride particles such as aluminum nitride and boron nitride; particles of covalent crystals such as silicon and diamond; particles of ionic crystals having low solubility such as barium sulfate, calcium fluoride, and barium fluoride; and microparticles of clays such as talc and montmorillonite. Of these, particles of oxides are preferable in view of stability in an electrolyte solution and electropotential stability. In particular, titanium oxide, aluminum oxide, aluminum oxide hydrate, magnesium oxide, and magnesium hydroxide are more preferable in view of low water absorption and excellent thermal resistance (for example, resistance against high temperature of 180 °C or more). Aluminum oxide, aluminum oxide hydrate, magnesium oxide, and magnesium hydroxide are particularly preferable.

As the organic particles, polymer particles are usually used. When organic particles are employed, their affinity to water can be controlled by adjusting the type and amount of a functional group on the surface of the particles, whereby it is possible to control the moisture amount contained in the porous membrane according to the present invention. Preferred examples of the organic materials for the non-conductive particles may include a variety of polymer compounds such as polystyrene, polyethylene, polyimide, a melamine resin, and a phenol resin. The polymer compounds forming the particles may be used even if they are a mixture, a modified form, a derivative, a random copolymer, an alternating copolymer, a graft copolymer, a block copolymer, a crosslinked form, etc. When polymer particles are used as the organic particles, the glass transition temperature thereof is preferably more than 20°C. The organic particles may be formed of a mixture of two or more polymer compounds.

If necessary, the non-conductive particles may be processed by element substitution, surface treatment, solid solution formation, etc. A single non-conductive particle may solely contain one of the aforementioned materials or may contain two or more of the aforementioned materials in combination at any ratio. In addition, the non-conductive particles may be used in a combination of two or more types of particles formed of different materials.

The volume average particle diameter D50 of the non-conductive particles is usually 0.1 µm or larger and preferably 0.2 µm or larger, and is usually 5 µm or smaller, preferably 2 µm or smaller, and more preferably 1 µm or smaller. Use of the non-conductive particles having such a volume average particle diameter D50 provides the porous membrane according to the present invention having a uniform thickness even if the membrane has thin thickness, whereby the capacity of the battery can be increased. The volume average particle diameter D50 represents a particle diameter at 50% of the cumulative volume calculated from the smaller diameter side in the particle diameter distribution measured by laser diffractometry.

The BET specific surface area of the non-conductive particles is, e.g., preferably 0.9 m²/g or more, and more preferably 1.5 m²/g or more. In view of suppressing aggregation of the non-conductive particles and realizing suitable fluidity of the slurry composition for a porous membrane, it is preferable that the BET specific surface area is not too large and, e.g., 150 m²/g or less.

Examples of the shapes of the non-conductive particles may include a spherical shape, a columnar shape such as a needle shape and a rod shape, a plate shape such as a scaly shape, and a tetrapod shape (for example, composed of connected particles). When the inorganic particles are used as the non-conductive particles, the tetrapod shape (connected particles) and plate shape are preferable. The inorganic particles having the aforementioned shape can easily ensure the void ratio (porosity) in the porous membrane and can ensure sufficient ionic conductivity.

### [1-2. Water-Soluble Polymer]

The water-soluble polymer is a copolymer that includes an ethylenically unsaturated carboxylic acid monomer unit, a (meth)acrylic acid ester monomer unit, and a fluorine-containing (meth)acrylic acid ester monomer unit at a specific ratio. The water-soluble polymer coats the non-conductive particles to improve the dispersibility of the non-conductive particles when the slurry composition for a porous membrane is prepared by using water as a solvent, whereby a uniform porous membrane can be obtained. In the porous membrane according to the present invention, the water-soluble polymer also has a function of connecting the non-conductive particles to each other. Since the water-soluble polymer has excellent binding strength, that can render the porous membrane according to the present invention less prone to peel off the organic separator. Furthermore, this water-soluble polymer has tendency to easily release water, and accordingly the moisture amount in the porous membrane according to the present invention can be sufficiently reduced before it is transferred to a dry room. Therefore, it is possible to suppress deformation of the porous membrane due to change in moisture amount.

The ethylenically unsaturated carboxylic acid monomer unit means a structural unit derived from an ethylenically unsaturated carboxylic acid monomer. Since the ethylenically unsaturated carboxylic acid monomer unit is a structural unit that has high strength and includes a carboxyl group (-COOH group) which increases the adhesion to the non-conductive particles and the organic separator, this monomer unit can increase the adhesion strength of the porous membrane according to the present invention to the separator, and improve the strength of the porous membrane according to the present invention.

Examples of the ethylenically unsaturated carboxylic acid monomer may include ethylenically unsaturated monocarboxylic acid and derivatives thereof, ethylenically unsaturated dicarboxylic acid and acid anhydrides thereof and derivatives thereof. Examples of the ethylenically unsaturated monocarboxylic acid may include acrylic acid, methacrylic acid, and crotonic acid. Examples of the derivatives of the ethylenically unsaturated monocarboxylic acid may include 2-ethylacrylic acid, isocrotonic acid, α-acetoxyacrylic acid, β-trans-aryloxyacrylic acid, α-chloro-β-E-methoxy acrylic acid, and β-diaminoacrylic acid. Examples of the ethylenically unsaturated dicarboxylic acid may include maleic acid, fumaric acid, and itaconic acid. Examples of the acid anhydrides of the ethylenically unsaturated dicarboxylic acid may include a maleic anhydride, an acrylic acid anhydride, a methylmaleic anhydride, and a dimethylmaleic anhydride. Examples of the derivatives of the ethylenically unsaturated dicarboxylic acid may include methyl allyl maleates such as methylmaleic acid, dimethylmaleic acid, phenylmaleic acid, chloromaleic acid, dichloromaleic acid, and fluoromaleic acid; and maleates such as diphenyl maleate, nonyl maleate, decyl maleate, dodecyl maleate, octadecyl maleate, and fluoroalkyl maleate. Of these, ethylenically unsaturated monocarboxylic acids such as acrylic acid and methacrylic acid are preferable. This is because they can further increase the dispersibility of the water-soluble polymer to water. As the ethylenically unsaturated carboxylic acid monomers, one species thereof may be solely used, or two or more species thereof may be used in a combination at any ratio.

The containing ratio of the ethylenically unsaturated carboxylic acid monomer unit in the water-soluble polymer is usually 15% by weight or more, preferably 20% by weight or more, and more preferably 25% by weight or more, and is usually 50% by weight or less, preferably 45% by weight or less, and more preferably 40% by weight or less. By setting the containing ratio of the ethylenically unsaturated carboxylic acid monomer unit to equal to or more than the lower limit of the aforementioned range, the solubility of the water-soluble polymer in water can be increased. By setting the containing ratio to equal to or less than the upper limit, the adhesion of the porous membrane according to the present invention to the organic separator can be increased. The containing ratio of the ethylenically unsaturated carboxylic acid monomer unit in the water-soluble polymer is usually equal to the containing ratio (charged amount ratio) of the ethylenically unsaturated carboxylic acid monomer with respect to the total monomer used for producing the water-soluble polymer.

The (meth)acrylic acid ester monomer unit means a structural unit derived from a (meth)acrylic acid ester monomer. Among (meth)acrylic acid ester monomers, however, those containing fluorine are categorized as fluorine-containing (meth)acrylic acid ester monomers and distinguished from the (meth)acrylic acid ester monomers. Since the (meth)acrylic acid ester monomer unit has high strength, it thus can stabilize the molecules of the water-soluble polymer.

Examples of the (meth)acrylic acid ester monomers may include alkyl acrylates such as methyl acrylate, ethyl acrylate, n-propylacrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and alkyl methacrylates such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One species of them may be solely used, or two or more species thereof may be used in combination at any ratio.

The containing ratio of the (meth)acrylic acid ester monomer unit in the water-soluble polymer is usually 30% by weight or more, preferably 35% by weight or more, and more preferably 40% by weight or more, and is usually 80% by weight or less, preferably 75% by weight or less, and more preferably 70% by weight or less. By setting the containing ratio of the (meth)acrylic acid ester monomer unit to equal to or more than the lower limit of the aforementioned range, the adhesion of the porous membrane according to the present invention to the organic separator can be increased. By setting the containing ratio to equal to or less than the upper limit, swelling of the porous membrane according to the present invention to the electrolyte solution can be suppressed, whereby ion conductivity of the separator for a secondary battery according to the present invention (it may be referred to hereinbelow as a "separator according to the present invention") can be increased. The containing ratio of the (meth)acrylic acid ester monomer unit in the water-soluble polymer is usually equal to the containing ratio (charged amount ratio) of the (meth)acrylic acid ester monomer with respect to the total monomer used for producing the water-soluble polymer.

The fluorine-containing (meth)acrylic acid ester monomer unit is a structural unit derived from the fluorine-containing (meth)acrylic acid ester monomer. By containing the fluorine-containing (meth)acrylic acid ester monomer unit, the water-soluble polymer can have elastic deformability, whereby the strength of the porous membrane according to the present invention can be increased. Further, a stress produced by change in moisture amount can also be relaxed, whereby generation of the curling can be prevented.

Examples of the fluorine-containing (meth)acrylic acid ester monomer may include monomers represented by the following formula (I).

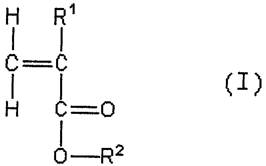

In the formula (I), R¹ represents a hydrogen atom or a methyl group.

In the formula (I), R² represents a hydrocarbon group containing a fluorine atom. The hydrocarbon group has usually one or more carbon atoms and usually 18 or less carbon atoms. In addition, R² may contain one fluorine atom or two or more fluorine atoms.

Examples of the fluorine-containing (meth)acrylic acid ester monomers represented by the formula (I) may include fluorinated alkyl (meth)acrylate, fluorinated aryl (meth)acrylate, and fluorinated aralkyl (meth)acrylate. Of these, fluorinated alkyl (meth)acrylate is preferable. Specific examples of such a monomer may include perfluoroalkyl (meth)acrylates such as 2,2,2-trifluoroethyl (meth)acrylate, β-(perfluorooctyl)ethyl (meth)acrylate, 2,2,3,3-tetrafluoropropyl (meth)acrylate, 2,2,3,4,4,4-hexafluorobutyl (meth)acrylate, 1H,1H,9H-perfluoro-1-nonyl (meth)acrylate, 1H,1H,11H-perfluoroundecyl (meth)acrylate, perfluorooctyl (meth)acrylate, and 3[4[1-trifluoromethyl-2,2-bis [bis(trifluoromethyl)fluoromethyl]ethynyloxy]benzooxy]2-hydroxypropyl (meth)acrylate. One species of them may be solely used, or two or more species thereof may be used in combination at any ratio.

The containing ratio of the fluorine-containing (meth)acrylic acid ester monomer unit in the water-soluble polymer is usually 0.5% by weight or more and preferably 1% by weight or more, and is usually 10% by weight or less and preferably 5% by weight or less. By setting the containing ratio of the fluorine-containing (meth)acrylic acid ester monomer unit to equal to or more than the lower limit of the aforementioned range, the ion conductivity of the porous membrane according to the present invention can be increased. By setting the containing ratio to equal to or less than the upper limit of the aforementioned range, the adhesion of the porous membrane according to the present invention to the organic separator can be increased. The containing ratio of the fluorine-containing (meth)acrylic acid ester monomer unit in the water-soluble polymer is usually equal to the containing ratio (charged amount ratio) of the fluorine-containing (meth)acrylic acid ester monomer with respect to the total monomer used for producing the water-soluble polymer.

The water-soluble polymer may include structural units other than the aforementioned ethylenically unsaturated carboxylic acid monomer unit, (meth)acrylic acid ester monomer unit, and fluorine-containing (meth)acrylic acid ester monomer unit, so long as the effects of the present invention are not significantly impaired. Such structural units are units that are derived from monomers copolymerizable with the ethylenically unsaturated carboxylic acid monomer, the (meth)acrylic acid ester monomer, and the fluorine-containing (meth)acrylic acid ester monomer.

Examples of the copolymerizable monomer may include carboxylic acid ester monomers having two or more carbon-carbon double bonds such as ethylene glycol dimethacrylate, diethylene glycol dimethacrylate, and trimethylolpropane triacrylate; styrene-based monomers such as styrene, chlorostyrene, vinyltoluene, t-butylstyrene, vinylbenzoic acid, methyl vinylbenzoate, vinylnaphthalene, chloromethylstyrene, hydroxymethylstyrene, α-methylstyrene, and divinylbenzene; amide-based monomers such as acrylamide, N-methylolacrylamide, and acrylamide-2-methylpropanesulfonic acid; α,β-unsaturated nitrile compound monomers such as acrylonitrile and methacrylonitrile; olefin monomers such as ethylene and propylene; halogen atom-containing monomers such as vinyl chloride and vinylidene chloride; vinyl ester monomers such as vinyl acetate, vinyl propionate, vinyl butyrate, and vinyl benzoate; vinyl ether monomers such as methyl vinyl ether, ethyl vinyl ether, and butyl vinyl ether; vinyl ketone monomers such as methyl vinyl ketone, ethyl vinyl ketone, butyl vinyl ketone, hexyl vinyl ketone, and isopropenyl vinyl ketone; and heterocyclic vinyl compound monomers such as N-vinylpyrrolidone, vinylpyridine, and vinylimidazole. As the copolymerizable monomers, one species thereof may be solely used, or two or more species thereof may be used in combination at any ratio.

In the water-soluble polymer, the containing ratio of structural units other that the ethylenically unsaturated carboxylic acid monomer unit, the (meth)acrylic acid ester monomer unit, and the fluorine-containing (meth)acrylic acid ester monomer unit is preferably 0% to 10% by weight, and more preferably 0% to 5% by weight.

The weight average molecular weight of the water-soluble polymer is preferably 100 or more, more preferably 500 or more, and particularly preferably 1,000 or more, and is preferably 500,000 or less, more preferably 250,000 or less, and particularly preferably 150,000 or less. By setting the weight average molecular weight of the water-soluble polymer to equal to or more than the lower limit of the aforementioned range, the strength of the water-soluble polymer can be increased and a stable porous membrane can be formed, whereby the dispersibility of the non-conductive particles, the high-temperature storage property of the secondary battery, etc. can be improved. By setting the weight average molecular weight to equal to or less than the upper limit of the aforementioned range, flexibility of the water-soluble polymer can be improved, whereby the adhesion of the porous membrane according to the present invention to the organic separator, etc. can be improved. Furthermore, the weight average molecular weight of the water-soluble polymer may be obtained by gel permeation chromatography (GPC) as a value in terms of a polystyrene with as a developing solvent a solution obtained by dissolving 0.85 g/ml of sodium nitrate in 10% by volume aqueous solution of dimethylformamide.

The glass transition temperature of the water-soluble polymer is usually 0°C or higher and preferably 5°C or higher, and is usually 100°C or lower and preferably 50°C or lower. When the glass transition temperature of the water-soluble polymer is within the aforementioned range, the porous membrane according to the present invention can have both adhesion and flexibility. The glass transition temperature of the water-soluble polymer may be adjusted by combining a variety of monomers.

The viscosity of the water-soluble polymer when prepared as a 1% by weight aqueous solution is preferably 0.1 mPa·s or higher, more preferably 1 mPa·s or higher, and particularly preferably 10 mPa·s or higher, and is preferably 20,000 mPa·s or lower, more preferably 10,000 mPa·s or lower, and particularly preferably 5000 mPa·s or lower. By setting the viscosity to equal to or higher than the lower limit of the aforementioned range, the strength of the water-soluble polymer can be increased to improve the durability of the porous membrane according to the present invention, and the stability of the slurry composition for a porous membrane can be increased. By setting the viscosity to equal to or lower than the upper limit, favorable coating property of the slurry composition for the porous membrane can be obtained, whereby the adhesion strength of the porous membrane according to the present invention to the organic separator can be improved. The viscosity may be adjusted by setting , e.g., the molecular weight of the water-soluble polymer. The aforementioned viscosity is a value when measured using an E-type viscometer at 25°C and a rotation speed of 60 rpm.

As a method for producing the water-soluble polymer, the water-soluble polymer may be produced by, e.g., polymerizing a monomer composition containing the aforementioned ethylenically unsaturated carboxylic acid monomer, (meth)acrylic acid ester monomer, and fluorine-containing (meth)acrylic acid ester monomer in an aqueous solvent.

Examples of the aqueous solvent may include water; ketones such as diacetone alcohol and γ-butyrolactone; alcohols such as ethyl alcohol, isopropyl alcohol, and normal propyl alcohol; glycol ethers such as propylene glycol monomethyl ether, methyl cellosolve, ethyl cellosolve, ethylene glycol tertiary butyl ether, butyl cellosolve, 3-methoxy-3-methyl-1-butanol, ethylene glycol monopropyl ether, diethylene glycol monobutyl ether, triethylene glycol monobutyl ether, and dipropylene glycol monomethyl ether; and ethers such as 1,3-dioxolane, 1,4-dioxolane, and tetrahydrofuran. Of these, water is particularly preferable because of its absence of combustibility. Water may be used as a main solvent, and the aforementioned aqueous solvents other than water may be mixed therewith for use.

The polymerization method is not particularly limited, and any methods such as a solution polymerization method, a suspension polymerization method, a bulk polymerization method, an emulsion polymerization method, etc. may be used. As a polymerization process, any processes such as ionic polymerization, radical polymerization, and living radical polymerization may be used.

This usually provides an aqueous solution in which the water-soluble polymer is dissolved in the aqueous solvent. The water-soluble polymer may be taken out of the obtained aqueous solution. Usually, the water-soluble polymer dissolved in the aqueous solvent is used for producing the slurry composition for a porous membrane, and the slurry composition for a porous membrane is used for producing the porous membrane according to the present invention.

Since the aqueous solution containing the water-soluble polymer in the aqueous solvent is usually acidic, if necessary, the aqueous solution may be alkalized to have pH of 7 to 13. By such alkalization, handling ability of the aqueous solution may be improved and the coating property of the slurry composition for a porous membrane can be improved. Examples of methods for alkalizing to pH 7 to 13 may include methods of mixing with an alkaline aqueous solution such as alkali metal aqueous solutions such as a lithium hydroxide aqueous solution, a sodium hydroxide aqueous solution, and a potassium hydroxide aqueous solution; alkaline earth metal aqueous solutions such as a calcium hydroxide aqueous solution and a magnesium hydroxide aqueous solution; and an aqueous ammonia solution. As the aqueous solutions, one species thereof may be solely used, or two or more species thereof may be used in combination at any ratio. The aqueous solution to be mixed is preferably an aqueous ammonia solution. This is because, when the slurry composition for a porous membrane is produced and this slurry composition is applied and dried to form a porous membrane, the moisture amount remaining in the formed porous membrane can be reduced.

The amount of the water-soluble polymer is usually 0.1 parts by weight or more, preferably 0.5 parts by weight or more, and more preferably 1 part by weight or more, and is usually 10 parts by weight or less and preferably 5 parts by weight or less, based on 100 parts by weight of the non-conductive particles. When the amount of the water-soluble polymer is equal to or more than the lower limit of the aforementioned range, the adhesion of the porous membrane according to the present invention to the organic separator can be increased. When the amount is equal to or less than the upper limit, the ion conductivity of the porous membrane according to the present invention can be increased.

### [1-3. Binding Agent]

If necessary, the porous membrane according to the present invention may contain a binding agent. The binding agent plays a role in maintaining the mechanical strength of the porous membrane according to the present invention. As the binding agent, a water-insoluble polymer is usually used. Among them, a water-insoluble polymer in a particle form (it may be referred to hereinbelow as the "water-insoluble particle polymer") is preferable.

The binding agent such as the water-insoluble particle polymer is preferably a copolymer including a (meth)acrylonitrile monomer unit and a (meth)acrylic acid ester monomer unit. The binding agent including a (meth)acrylonitrile monomer unit and a (meth)acrylic acid ester monomer unit is stable to reduction and oxidation and has capability to readily provide a battery having a long lifetime. In addition, by using an acrylate including these structural units as the binding agent, flexibility of the porous membrane according to the present invention can be improved, and accordingly, it is possible to prevent removal of the non-conductive particles from the porous membrane according to the present invention during slitting or winding.

The (meth)acrylonitrile monomer unit refers to a structural unit derived from (meth)acrylonitrile. The binding agent may include, as the (meth)acrylonitrile monomer unit, only a structural unit derived from acrylonitrile, only a structural unit derived from methacrylonitrile, or both the structural unit derived from acrylonitrile and the structural unit derived from methacrylonitrile in combination at any ratio.

The (meth)acrylic acid ester monomer unit refers to a structural unit derived from (meth)acrylic acid ester. Examples of (meth)acrylic acid ester may include alkyl (meth)acrylates such as methyl (meth)acrylate, ethyl (meth)acrylate, butyl (meth)acrylate, hexyl (meth)acrylate, and 2-ethylhexyl (meth)acrylate; and carboxylic acid esters having two or more carbon-carbon double bonds such as ethylene glycol dimethacrylate, diethylene glycol dimethacrylate, and trimethylolpropane triacrylate. The binding agent may solely include only one species of (meth)acrylic acid ester monomer unit, or may include two or more of species thereof in combination at any ratio.

When the binding agent includes the (meth)acrylonitrile monomer unit and the (meth)acrylic acid ester monomer unit, the weight ratio of the (meth)acrylonitrile monomer unit with respect to the (meth)acrylic acid ester monomer unit (the weight ratio expressed by "(meth)acrylonitrile monomer unit / (meth)acrylic acid ester monomer unit") is preferably 1/99 or higher and more preferably 5/95 or higher, and is preferably 30/70 or lower and more preferably 25/75 or lower. When the weight ratio is equal to or higher than the lower limit of the aforementioned range, a decrease in ion conductivity due to swelling of the binding agent with the electrolyte solution in the secondary battery of the present invention can be prevented, and a decrease in rate property can thereby be suppressed. When the weight ratio is equal to or lower than the upper limit of the aforementioned range, a decrease in strength of the porous membrane according to the present invention due to a decrease in strength of the binding agent can be prevented. The containing ratio of the (meth)acrylonitrile monomer unit and the (meth)acrylic acid ester monomer unit in the binding agent is usually the same as the containing ratio (charged amount ratio) of the (meth)acrylonitrile monomer and the (meth)acrylic acid ester monomer with respect to the total monomer used for producing the binding agent.

The binding agent preferably has a crosslinkable group. By having a crosslinkable group, the binding agents can be cross-linked to each other, or the water-soluble polymer and the binding agent can be cross-linked. Accordingly, dissolution and swelling of the porous membrane according to the present invention in the electrolyte solution can be suppressed, and thereby a tough, flexible porous membrane can be realized.

As the crosslinkable group, a thermally crosslinkable group which causes a crosslinking reaction by heat is usually used. Examples of the crosslinkable group may include an epoxy group, an N-methylol amido group, an oxazoline group, and an allyl group. Of these, an epoxy group and an allyl group are preferable because therewith crosslinking and crosslinking density can be easily adjusted. The binding agent may have one species of crosslinkable group, or may have two or more species of crosslinkable groups.

The crosslinkable group may be introduced into the binding agent by copolymerization of monomers containing the crosslinkable group during the production of the binding agent, or may be introduced into the binding agent by a commonly-used modifying method using a compound having the crosslinkable group (crosslinking agent). For example, the thermally-crosslinkable crosslinking group may be introduced into the binding agent by copolymerization of a monomer providing the (meth)acrylonitrile monomer unit, a monomer providing the (meth)acrylic acid ester monomer, and a monomer containing a thermally-crosslinkable crosslinking group, and, if necessary, other monomers copolymerizable therewith, upon producing the binding agent.

When the binding agent has the crosslinkable group, the binding agent usually has a structural unit having the crosslinkable group (it will be appropriately referred to hereinbelow as a "crosslinkable monomer unit"). The binding agent may have one species of structural unit having the crosslinkable group, or may have two or more species of structural units. Examples of the monomer corresponding to the crosslinkable monomer unit or the crosslinking agent may be as follows.

Examples of the monomer containing an epoxy group may include a monomer containing a carbon-carbon double bond and an epoxy group, and a monomer containing a halogen atom and an epoxy group.

Examples of the monomer containing a carbon-carbon double bond and an epoxy group may include unsaturated glycidyl ethers such as vinyl glycidyl ether, allyl glycidyl ether, butenyl glycidyl ether, and o-allylphenyl glycidyl ether; monoepoxides of dienes or polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid.

Examples of the monomer having a halogen atom and an epoxy group may include epihalohydrins such as epichlorohydrin, epibromohydrin, epiiodohydrin, epifluorohydrin, and β-methyl epichlorohydrin; p-chlorostyrene oxide; and dibromophenyl glycidyl ether.

Examples of the monomer containing an N-methylol amido group may include (meth)acrylamides having a methylol group such as N-methylol(meth)acrylamide.

Examples of the monomer containing an oxazoline group may include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of the monomer containing an allyl group may include allyl acrylate and allyl methacrylate.

As the crosslinking agent, organic peroxides and crosslinking agents that exert an effect by heat or light may also be used. As the crosslinking agents, one species thereof may be solely used, or two or more species thereof may be used in combination at any ratio. Of these, organic peroxides and crosslinking agents that exert an effect by heat are preferable because they have a thermally-crosslinkable crosslinking group.

Examples of the organic peroxides may include ketone peroxides such as methyl ethyl ketone peroxide and cyclohexanone peroxide; peroxyketals such as 1,1-bis(t-butylperoxy)-3,3,5-trimethylcyclohexane and 2,2-bis(t-butylperoxy)butane; hydroperoxides such as t-butyl hydroperoxide and 2,5-dimethylhexane-2,5-dihydroperoxide; dialkyl peroxides such as dicumyl peroxide, 2,5-dimethyl-2,5-di(t-butylperoxy)hexyne-3, α,α'bis(t-butylperoxy-m-isopropyl)benzene: diacyl peroxides such as octanoyl peroxide and isobutyryl peroxide; and peroxy esters such as peroxydicarbonate. One species of them may be solely used, or two or more species thereof may be used in combination at any ratio. Of these, dialkyl peroxides are preferable because of the performance of resins after crosslinking. The type of the alkyl group is preferably changed in accordance with forming temperature.

As the crosslinking agent (curing agent) that exerts an effect by heat, those that can cause a crosslinking reaction by heating may be used. Examples of the crosslinking agent that exerts an effect by heat may include diamine, triamine or higher aliphatic polyamines, alicyclic polyamines, aromatic polyamine bisazide, acid anhydrides, diols, polyphenols, polyamides, diisocyanates, and polyisocyanates. Specific examples thereof may include aliphatic polyamines such as hexamethylenediamine, triethylenetetramine, diethylenetriamine, and tetraethylenepentamine; diaminocyclohexane, 3(4),8(9)-bis(aminomethyl)tricyclo[5.2.1.0^{2,6}]decane; alicyclic polyamines such as 1,3-(diaminomethyl)cyclohexane, menthene diamine, isophoronediamine N-aminoethyl piperazine, bis(4-amino-3-methylcyclohexyl)methane, and bis(4-aminocyclohexyl)methane; aromatic polyamines such as 4,4'-diaminodiphenyl ether, 4,4'-diaminodiphenylmethane, α,α'-bis(4-aminophenyl)-1,3-diisopropylbenzene, α,α'-bis(4-aminophenyl)-1,4-diisopropylbenzene, 4,4'-diaminodiphenyl sulfone, and metaphenylenediamine; bisazides such as 4,4-bisazidobenzal(4-methyl)cyclohexanone, 4,4'-diazidochalcone, 2,6-bis(4'-azidobenzal)cyclohexanone, 2,6-bis(4'-azidobenzal)-4-methyl-cyclohexanone, 4,4'-diazidodiphenylsulfone, 4,4'-diazidodiphenylmethane, and 2,2'-diazidostilbene; acid anhydrides such as phthalic anhydride, pyromellitic anhydride, benzophenone tetracarboxylic acid anhydride, nadic acid anhydride, 1,2-cyclohexane dicarboxylic acid, maleic anhydride-modified polypropylene, and maleic anhydride-modified norbornene resin; diols such as 1,3'-butanediol, 1,4'-butanediol, hydroquinone dihydroxydiethyl ether, and tricyclodecane dimethanol; triols such as 1,1,1-trimethylolpropane; polyphenols such as phenol novolac resins and cresol novolac resins; polyhydric alcohols such as tricyclodecanediol, diphenylsilanediol, ethylene glycol and derivatives thereof, diethylene glycol and derivatives thereof, and triethylene glycol and derivatives thereof; polyamides such as Nylon 6, Nylon 66, Nylon 610, Nylon 11, Nylon 612, Nylon 12, Nylon 46, methoxymethylated polyamide, polyhexamethylenediamine terephthalamide, and polyhexamethylene isophthalamide; diisocyanates such as hexamethylene diisocyanate and toluylene diisocyanate; polyisocyanates such as dimers or trimers of diisocyanates, and adducts of diisocyanates with diols or triols; and blocked isocyanates in which an isocyanate moiety is protected by a blocking agent. One species of them may be solely used, or two or more species thereof may be used in combination at any ratio. Of these, aromatic polyamines, acid anhydrides, polyphenols, and polyhydric alcohols are preferable because of excellent strength and adhesion of the porous membrane. Of these, 4,4-diaminodiphenylmethane (aromatic polyamine), maleic anhydride-modified norbornene resin (acid anhydride), and polyhydric phenols are particularly preferable.

Examples of the crosslinking agent (curing agent) that exerts an effect by light may include photoactive substances that react with the binding agent to produce a crosslinked compound upon irradiation with active rays such as ultraviolet rays such as g rays, h rays, and i rays, far ultraviolet rays, x rays, and electron rays. Examples of such a crosslinking agent may include aromatic bisazide compounds, photoamine generators, and photo acid generators.

Specific examples of the aromatic bisazide compounds may include 4,4'-diazidochalcone, 2,6-bis(4'-azidobenzal)cyclohexanone, 2,6-bis(4'-azidobenzal)4-methylcyclohexanone, 4,4'-diazidodiphenylsulfone, 4,4'-diazidobenzophenone, 4,4'-diazidodiphenyl, 2,7-diazidofluorene, and 4,4'-diazidophenylmethane as representative examples. One species of them may be solely used, or two or more species thereof may be used in combination at any ratio.

Specific examples of the photoamine generators may include o-nitrobenzyloxycarbonyl carbamates, 2,6-dinitrobenzyloxycarbonyl carbamates, and α,α-dimethyl-3,5-dimethoxybenzyloxycarbonyl carbamates, of aromatic amines or aliphatic amines. More specific examples may include o-nitrobenzyloxycarbonyl carbamates of aniline, cyclohexylamine, piperidine, hexamethylenediamine, triethylenetetramine, 1,3-(diaminomethyl)cyclohexane, 4,4'-diaminodiphenyl ether, 4,4'-diaminodiphenylmethane, phenylenediamine, etc. One species of them may be solely used, or two or more species thereof may be used in combination at any ratio.

The photo acid generator is a substance that is cleaved by irradiation with active rays to produce acids such as Bronsted acid and Lewis acid. Examples thereof may include onium salts, halogenated organic compounds, quinone diazide compounds, α,α-bis(sulfonyl)diazomethane-based compounds, α-carbonyl-α-sulfonyl-diazomethane-based compounds, sulfone compounds, organic acid ester compounds, organic acid amide compounds, and organic acid imide compounds. One species of them may be solely used, or two or more species thereof may be used in combination at any ratio.

When the binding agent has the crosslinkable group, the amount of the crosslinkable monomer unit in the binding agent is preferably 0.01 parts by weight or more and more preferably 0.05 parts by weight or more, and is preferably 5 parts by weight or less, more preferably 4 parts by weight or less, and particularly preferably 3 parts by weight or less, based on 100 parts by weight of the total amount of the (meth)acrylonitrile monomer unit and the (meth)acrylic acid ester monomer unit. By setting the amount to equal to or more than the lower limit of the aforementioned range, it is possible to increase strength of the porous membrane according to the present invention, and to prevent decrease in rate property of the secondary battery due to swelling of the porous membrane according to the present invention with the electrolyte solution. By setting the amount to equal to or less than the upper limit of the aforementioned range, it is possible to prevent decrease in flexibility of the porous membrane according to the present invention due to excessive progress of the crosslinking reaction. The containing ratio of the crosslinkable monomer unit in the binding agent is usually the same as the containing ratio (charged amount ratio) of the monomer corresponding to the crosslinkable monomer unit or the crosslinking agent with respect to the total monomer used for producing the binding agent.

In addition to the aforementioned structural units (i.e., the (meth)acrylonitrile monomer unit, (meth)acrylic acid ester monomer unit, and crosslinkable group monomer unit), the binding agent may include optional structural units. Examples of monomers corresponding to the optional structural units may include styrene-based monomers such as styrene, chlorostyrene, vinyltoluene, t-butylstyrene, vinylbenzoic acid, methyl vinylbenzoate, vinylnaphthalene, chloromethylstyrene, α-methylstyrene, and divinylbenzene; olefins such as ethylene and propylene; diene monomers such as butadiene and isoprene; halogen atom-containing monomers such as vinyl chloride and vinylidene chloride; vinyl esters such as vinyl acetate, vinyl propionate, and vinyl butyrate; vinyl ethers such as methyl vinyl ether, ethyl vinyl ether, and butyl vinyl ether; vinyl ketones such as methyl vinyl ketone, ethyl vinyl ketone, butyl vinyl ketone, hexyl vinyl ketone, and isopropenyl vinyl ketone; heterocyclic vinyl compounds such as N-vinylpyrrolidone, vinylpyridine, and vinylimidazole; and amide monomers such as acrylamide and acrylamide-2-methylpropanesulfonic acid. The binding agent may solely include only one species of these structural units, or may include two or more species thereof in combination at any ratio. The amount of the optional structural units is preferably small and the optional structural units are particularly preferably absent in view of significantly exerting the aforementioned advantages of containing the (meth)acrylonitrile monomer unit and (meth)acrylic acid ester monomer unit.

The weight average molecular weight of the binding agent is usually larger than the weight average molecular weight of the water-soluble polymer, and is preferably 10,000 or more and more preferably 20,000 or more, and is preferably 500,000 or less and more preferably 200,000 or less. When the weight average molecular weight of the binding agent falls within the aforementioned range, strength of the porous membrane according to the present invention and dispersibility of the non-conductive particles can be easily made favorable.

The volume average particle diameter D50 of the binding agent is preferably 0.01 µm or larger, and is preferably 0.5 µm or smaller and more preferably 0.2 µm or smaller. By setting the volume average particle diameter D50 of the binding agent to equal to or larger than the lower limit of the aforementioned range, porosity of the porous membrane according to the present invention can be kept at a high level to thereby suppress the resistance of the porous membrane and thus keep good battery properties. By setting the volume average particle diameter D50 to equal to or smaller than the upper limit of the aforementioned range, the number of points at which the non-conductive particles are attached to the binding agent can be increased, and the binding property can thereby be increased.

The glass transition temperature (Tg) of the binding agent is preferably -50°C or higher, more preferably -40°C or higher, and particularly preferably - 30°C or higher, and is preferably 20°C or lower, more preferably 15°C or lower, and particularly preferably 5°C or lower. When the glass transition temperature (Tg) falls within the aforementioned range, it is possible to increase flexibility of the porous membrane according to the present invention, and to thereby improve the bending resistance of the separator. Accordingly, the defective rate due to breakage of the porous membrane according to the present invention can be decreased. In addition, the porous membrane according to the present invention and the separator can also be prevented from cracking and chipping when wrapped around a roll or wound up. The glass transition temperature of the binding agent may be adjusted by combining a variety of monomers.

The amount of the binding agent is usually 0.1 parts by weight or more, preferably 0.2 parts by weight or more, and more preferably 0.5 parts by weight or more, and is usually 20 parts by weight or less, preferably 15 parts by weight or less, and more preferably 10 parts by weight or less, based on 100 parts by weight of the non-conductive particles. By setting the amount of the binding agent to equal to or more than the lower limit of the aforementioned range, the strength of the porous membrane according to the present invention can be increased. By setting the amount to equal to or less than the upper limit of the aforementioned range, the air permeability of the porous membrane according to the present invention can be suppressed, to thereby provide favorable rate property of the secondary battery. The amount of the binding agent falling within the aforementioned range is meaningful also in terms of keeping the binding property between the non-conductive particles and the binding property to the organic separator, keeping the flexibility of the porous membrane, and in terms of suppressing an increase in resistance of the secondary battery due to inhibition of Li migration.

The weight ratio of the water-soluble polymer with respect to the binding agent (water-soluble polymer / binding agent) is preferably 0.01 or more and more preferably 0.1 or more, and is preferably 1.5 or less and more preferably 1.0 or less. When the weight ratio is equal to or more than the lower limit of the aforementioned range, the dispersion of the non-conductive particles and the strength of the porous membrane can be improved. When the weight ratio is equal to or less than the upper limit, the stability of the slurry composition for a porous membrane can be improved.

The method for producing the binding agent is not particularly limited and any methods such as a solution polymerization method, a suspension polymerization method, and an emulsion polymerization method may be used. Of these, the emulsion polymerization method and the suspension polymerization method are preferable because polymerization can be effected in water and the product as it is can be used as the material for the slurry composition for a porous membrane. Upon producing the binding agent, it is preferable that the reaction system includes a dispersant. As the dispersant, those used in ordinary synthesis may be used. Specific examples may include benzenesulfonates such as sodium dodecylbenzenesulfonate and sodium dodecylphenyl ether sulfonate; alkyl sulfates such as sodium laurylsulfate and sodium tetradodecylsulfate; sulfosuccinates such as sodium dioctylsulfosuccinate and sodium dihexylsulfosuccinate; fatty acid salts such as sodium laurate; ethoxy sulfates such as sodium polyoxyethylene lauryl ether sulfate and sodium polyoxyethylene nonyl phenyl ether sulfate; alkanesulfonates; sodium alkyl ether phosphates; nonionic emulsifiers such as polyoxyethylene nonyl phenyl ether, polyoxyethylene sorbitan lauryl ester, and a polyoxyethylene-polyoxypropylene block copolymer; and water-soluble polymers such as gelatin, maleic anhydride-styrene copolymer, polyvinylpyrrolidone, sodium polyacrylate, and polyvinyl alcohol having polymerization degree of 700 or more and saponification degree of 75% or more. One species of them may be solely used, or two or more species thereof may be used in combination at any ratio. Of these, benzenesulfonates such as sodium dodecylbenzenesulfonate and sodium dodecylphenyl ether sulfonate; and alkyl sulfates such as sodium laurylsulfate and sodium tetradodecylsulfate are preferable. Further, benzenesulfonates such as sodium dodecylbenzenesulfonate and sodium dodecylphenyl ether sulfonate, are more preferable in terms of excellent oxidation resistance. The amount of the dispersant may be set as desired and is usually about 0.01 to 10 parts by weight based on 100 parts by weight of the total amount of the monomer.

### [1-4. Other Components]

The porous membrane according to the present invention may contain optional components in addition to the aforementioned components. As the optional components, those which have no significant undesirable effects on the battery reaction in the secondary battery according to the present invention may be used. As the optional components one species thereof may be solely used, or two or more species thereof may be used.

### [1-5. Method for Producing Porous Membrane]

The porous membrane according to the present invention may be produced by, e.g., applying the slurry composition for a porous membrane on a surface of a suitable coating subject substrate to form a coating layer, and then removing water from the formed coating layer.

The slurry composition for a porous membrane contains the non-conductive particles, the water-soluble polymer, and water, and, if necessary, components such as the binding agent. Usually, while part of the water-soluble polymer is dissolved in water in the slurry composition for a porous membrane, the other part of water-soluble polymer is adsorbed on the surface of the non-conductive particles. Thus, the non-conductive particles are covered with a layer (stable dispersion layer) of the water-soluble polymer, whereby the dispersibility of the non-conductive particles in water is improved.

Water functions as a solvent in the slurry composition for a porous membrane. In the slurry composition for a porous membrane, aggregation of the non-conductive particles is kept at a low level even in water, and the non-conductive particles are favorably dispersed.

Usually, the amount of water contained in the slurry composition for a porous membrane may be arbitrary set in a range so that the slurry composition for a porous membrane has a viscosity in the range where workability is not impaired during the production of the porous membrane according to the present invention. Specifically, the amount of water is set such that the solid content concentration of the slurry composition for a porous membrane is usually 20% to 50% by weight.

The slurry composition for a porous membrane may contain a viscosity modifier. When the viscosity modifier is contained, the viscosity of the slurry composition for a porous membrane can be adjusted to a desired range, whereby the dispersibility of the non-conductive particles and the coating property of the slurry composition for a porous membrane can be increased.

As the viscosity modifier, water-soluble polysaccharides are preferably used. Examples of the polysaccharides may include natural macromolecules and semi-synthetic cellulose-based macromolecules. As the viscosity modifiers, one species thereof may be solely used, or two or more species thereof may be used in combination at any ratio.

Examples of the natural macromolecule may include polysaccharides and proteins that are derived from plants or animals. In some cases, the examples may also include natural macromolecules that are treated by fermentation with microorganisms, etc. and natural polymers that are treated by heat. These natural macromolecules may be classified into, e.g., plant-derived natural macromolecules, animal-derived natural macromolecules, and microorganism-derived natural macromolecules.

Examples of the plant-derived natural macromolecules may include Arabia gum, tragacanth gum, galactan, guar gum, carob gum, karaya gum, carrageenan, pectin, agar, quince seed (quince), algae colloid (brown algae extract), starches (derived from, e.g., rice, corn, potato, and wheat), and glycyrrhizin. Examples of the animal-derived natural macromolecules may include collagen, casein, albumin, and gelatin. Furthermore, the microorganism-derived natural macromolecules may include xanthan gum, dextran, succinoglucan, and pullulan.

The semi-synthetic cellulose-based macromolecules may be classified into nonionic, anionic, and cationic.

Examples of the nonionic semi-synthetic cellulose-based macromolecules may include alkyl celluloses such as methyl cellulose, methylethyl cellulose, ethyl cellulose, and microcrystalline cellulose; and hydroxyalkyl celluloses such as hydroxyethyl cellulose, hydroxybutyl methyl cellulose, hydroxypropyl cellulose, hydroxypropyl methyl cellulose, hydroxyethyl methyl cellulose, hydroxypropyl methyl cellulose stearoxy ether, carboxymethyl hydroxyethyl cellulose, alkyl hydroxyethyl cellulose, and nonoxynyl hydroxyethyl cellulose.

The anionic semi-synthetic cellulose-based macromolecules may include alkyl celluloses obtained by substituting the aforementioned nonionic semi-synthetic cellulose-based macromolecules with a variety of derivative groups, and sodium salts and ammonium salts thereof. Specific examples thereof may include sodium cellulose sulfate, methyl cellulose, methyl ethyl cellulose, ethyl cellulose, carboxymethyl cellulose (CMC), and salts thereof.

Examples of the cationic semi-synthetic cellulose macromolecules may include low nitrogen hydroxyethyl cellulose dimethyl diallylammonium chloride (Polyquaternium-4), O-[2-hydroxy-3-(trimethylammonio)propyl]hydroxyethyl cellulose chloride (Polyquaternium-10), and 0-[2-hydroxy-3-(lauryldimethylammonio)propyl]hydroxyethyl cellulose chloride (Polyquaternium-24).

Of these, the semi-synthetic cellulose-based macromolecules, and sodium salts and ammonium salts thereof are preferable because they can have cationic or anionic characteristics, or both. Among them, the anionic semi-synthetic cellulose-based macromolecules are particularly preferable in view of the dispersibility of the non-conductive particles.

The etherification degree of the semi-synthetic cellulose-based macromolecule is preferably 0.5 or more and more preferably 0.6 or more, and is preferably 1.0 or less and more preferably 0.8 or less. The etherification degree herein refers to degree of substitution of (three) hydroxyl groups per one anhydrous glucose unit in cellulose with substituents such as a carboxymethyl group. Theoretically the etherification degree may have a value of 0 to 3. When the etherification degree falls within the aforementioned range, the semi-synthetic cellulose-based macromolecule is adsorbed on the surface of the non-conductive particles while having compatibility to water, so that the non-conductive particles can have excellent dispersibility and can be microdispersed to the primary particle level.

In addition, when macromolecules (including polymers) are used as the viscosity modifier, the average polymerization degree of the viscosity modifier, which is calculated from the limiting viscosity obtained with an Ubbelohde viscometer, is preferably 500 or more, more preferably 1,000 or more, and particularly preferably 1,000 or more, and is preferably 2,500 or less, more preferably 2,000 or less, and particularly preferably 1,500 or less. The average polymerization degree of the viscosity modifier may have effects on the fluidity of the slurry composition for a porous membrane, the uniformity of the porous membrane, and the process in the steps. By setting the average polymerization degree falling within the aforementioned range, the stability with the lapse of time of the slurry composition for a porous membrane can be improved, to realize coating with no aggregates or thickness unevenness.

When the slurry composition for a porous membrane contains the viscosity modifier, the amount of the viscosity modifier is usually 0.1 parts by weight or more and preferably 0.2 parts by weight or more, and is usually 10 parts by weight or less, preferably 7 parts by weight or less, and more preferably 5 parts by weight or less, based on 100 parts by weight of the non-conductive particles. By setting the amount of the viscosity modifier falling within the aforementioned range, the viscosity of the slurry composition for a porous membrane can be adjusted in a suitable range with which handling can be easily performed. Usually, the viscosity modifier is also contained in the porous membrane according to the present invention. By setting the amount of the viscosity modifier to equal to or more than the lower limit of the aforementioned range, the strength of the porous membrane according to the present invention can be increased. By setting the amount to equal to or less than the upper limit, the porous membrane according to the present invention can have favorable flexibility.

The slurry composition for a porous membrane may contain optional components in addition to the aforementioned components. As the optional components, those which do not have significant undesirable effects on the battery reaction in the secondary battery may be used. As the optional components one species thereof may be solely used, or two or more species thereof may be used.

Examples of the optional components may include a dispersant and an electrolyte solution dispersion inhibitor.

Examples of the dispersant may include anionic compounds, cationic compounds, nonionic compounds, and polymer compounds. Usually, the type of the dispersant is specifically selected in accordance with the non-conductive particles to be used.

The slurry composition for a porous membrane may also contain a surfactant such as alkyl-based surfactants, silicon-based surfactants, fluorosurfactants, and metallic surfactants. By containing the surfactant, repelling during coating of the slurry composition for a porous membrane can be prevented, and the smoothness of the surface of the electrode can be improved. The amount of the surfactant is preferably in the range that does not affect battery property, and is preferably 10% by weight or less in the porous membrane according to the present invention.

The slurry composition for a porous membrane may contain nanoparticles having a volume average particle diameter of smaller than 100 nm such as fumed silica and fumed alumina. By containing nanoparticles, the thixotropy of the slurry composition for a porous membrane can be controlled, and the leveling property of the porous membrane according to the present invention can be further improved.

The slurry composition for a porous membrane may further contain a solvent other than water so long as the effects of the present invention are not significantly impaired. For example, acetone, tetrahydrofuran, methylene chloride, chloroform, dimethylformamide, N-methylpyrrolidone, cyclohexane, xylene, and cyclohexanone may be contained.

Since the slurry composition for a porous membrane has high dispersibility of the non-conductive particles, the viscosity thereof can be easily reduced. The specific viscosity of the slurry composition for a porous membrane is preferably 10 to 2000 mPa·s in view of providing good coating property during the production of the porous membrane according to the present invention. The aforementioned viscosity is a value when measured using an E-type viscometer at 25°C and a rotation speed of 60 rpm.

The method for producing the slurry composition for a porous membrane is not particularly limited. The slurry composition for a porous membrane is usually obtained by mixing the aforementioned non-conductive particles, water-soluble polymer, and water, and optional components that are used if necessary, such as the binding agent. There is no particular limitation on mixing order. In addition, there is also no particular limitation on mixing method. In order to quickly disperse the non-conductive particles, a disperser is usually used as a mixing device for performing mixing.

It is preferable that the disperser is a device that can uniformly disperse and mix the aforementioned components. Examples thereof may include a ball mill, a sand mill, a pigment disperser, a grinding machine, an ultrasonic disperser, a homogenizer, and a planetary mixer. In particular, high level dispersing devices such as a bead mill, a roll mill, and FILMIX, are preferable because they can apply high dispersion shear.

Since the non-conductive particles have good dispersibility in the slurry composition for the porous membrane, aggregation of the non-conductive particles can be decomposed with a small energy. For this reason, the non-conductive particles can be dispersed in a short period of time. Since the non-conductive particles can be dispersed without applying a large force, excessive energy is not applied to the non-conductive particles and thus change in particle diameter due to unintentional cracking of the non-conductive particles can also be prevented.

The coating subject substrate is a member on which a layer of the slurry composition for a porous membrane is formed. There is no limitation on the coating subject substrate. An example of possible method is as follows: forming a coating layer of the slurry composition for a porous membrane on the surface of a release film, removing water from the coating layer to form the porous membrane according to the present invention, and releasing the porous membrane according to the present invention from the release film. However, in view of increasing production efficiency by omitting the step of releasing the porous membrane according to the present invention, a component of the battery is usually used as the coating subject substrate. Specific examples of such a component of the battery may include an organic separator.

There is no limitation on the method for forming the coating layer of the slurry composition for a porous membrane on the surface of the coating subject substrate, and examples thereof may include a coating method and an immersion method. Of these, the coating method is preferable since thereby the thickness of the porous membrane according to the present invention can be easily controlled. Examples of the coating method may include a doctor blade method, a dipping method, a reverse roll method, a direct roll method, a gravure method, an extrusion method, and a brush coating method. Of these, the dipping method and the gravure method are preferable because thereby a uniform porous membrane can be obtained.

Although there is no limitation on the method for removing water from the coating layer, water is usually removed by drying. Examples of the drying method may include drying with airs such as hot air, warm air, and low humid air, vacuum drying, and drying methods by irradiation with, e.g., (far-)infrared rays, and electron beams.

The drying temperature is set such that water is evaporated and removed from the coating layer. When the binding agent has a thermally crosslinkable group, it is preferable to perform drying at a high temperature that is equal to or higher than the temperature at which the crosslinking reaction of the thermally crosslinkable group occurs. This enables removal of water from the coating layer and crosslinking at the same time, whereby the number of steps can be reduced and production efficiency can be improved. The layer is usually dried at 40 to 120°C.

In the production of the porous membrane according to the present invention, a step other than the aforementioned coating step and drying step may further be carried out. For example, it is possible to perform a pressure treatment using, e.g., mold press, and roll press. This can improve the adhesion between the coating subject substrate and the porous membrane according to the present invention. The pressure treatment is particularly useful when the organic separator, etc. are used as the coating subject substrate. However, when the pressure treatment is excessively performed, the void ratio of the porous membrane according to the present invention may be reduced. Therefore, it is preferable to properly control the pressure and pressing time.

### [1-3. Properties]

By having spaces between the non-conductive particles, the porous membrane according to the present invention can have adequate porosity and can absorb the electrolyte solution. It is considered that, in the porous membrane according to the present invention, the water-soluble polymer is present covering the surface of the non-conductive particles. However, not all of the aforementioned spaces are filled with the water-soluble polymer. Therefore, the water-soluble polymer does not impair the porosity of the porous membrane according to the present invention. Accordingly, the electrolyte solution can permeate the porous membrane according to the present invention. Therefore, even if the porous membrane according to the present invention is provided on the separator, it does not inhibit the battery reaction. Therefore, it is possible to realize a secondary battery having high rate property.

The moisture amount of the porous membrane according to the present invention when the porous membrane is stored in a constant-temperature constant-humidity chamber (temperature: 25°C, humidity: 50%) for one day is defined as "W1". The moisture amount of the porous membrane when the porous membrane is stored in a dry room (dew point: -60°C, humidity: 0.05%) for one day is defined as "W2". In this case, W1 and W2 usually satisfy the relationship of W1/W2 ≤ 2.5. Thus, the change in moisture amount of the porous membrane according to the present invention is small when the porous membrane is transferred from the constant-temperature constant-humidity chamber to the dry room. Therefore, curling due to the change in moisture amount can be suppressed.

Since the porous membrane according to the present invention easily releases moisture, the moisture can be easily removed by drying. Therefore it is possible to suppress the moisture amount of the porous membrane according to the present invention at low level, whereby gas generation in the secondary battery can be reduced. Accordingly, the porous membrane can suppress a decrease in discharge capacity due to gas generation, to thereby improve high temperature cycle property of the secondary battery.

When the porous membrane according to the present invention is too thin, a uniform membrane may not be formed. When it is too thick, the capacity per volume (weight) in the battery may decrease. Hence, it is preferable that the thickness is 1 µm to 50 µm. It is also preferable that the thickness is 1 µm to 20 µm.

### [2. Secondary Battery Electrode]

The secondary battery electrode used for the present invention includes a current collector and an electrode material layer which is attached to the current collector and contains a binding agent for an electrode material layer and an electrode active material.

### [2-1. Current Collector]

As the current collector, materials having electrical conductivity and electrochemical durability can be used. In particular, metallic materials such as iron, copper, aluminum, nickel, stainless steel, titanium, tantalum, gold, and platinum are preferable in view of having thermal resistance. Of these, aluminum is particularly preferable for a positive electrode of a nonaqueous electrolyte secondary battery and copper is particularly preferable for a negative electrode.

The shape of the current collector is not particularly limited, but is preferably a sheet shape having a thickness of about 0.001 mm to 0.5 mm.

It is preferable that the current collector is previously subjected to a surface roughening process in advance of its use, for improving the adhesion strength to the electrode material layer. Examples of the surface roughening method may include mechanical polishing, electrolytic polishing, and chemical polishing. In the mechanical polishing, polishing cloth or paper having abrasive particles fixed thereon, a grindstone, an emery wheel, or a wire brush provided with, e.g., steel wire is used.

Further, for improving the adhesion strength to the electrode material layer and the conductivity, an intermediate layer may be formed on the surface of the current collector.

### [2-2. Electrode Material Layer]

### (Electrode Active Material)

The electrode material layer includes an electrode active material as an essential component. In the following description, among the electrode active materials, those for a positive electrode may be particularly referred to as "positive electrode active materials", and those for a negative electrode may be particularly referred to as "negative electrode active materials". In particular, electrode active materials for lithium secondary batteries will be herein described as examples.

As the electrode active materials for lithium secondary batteries, those to and from which lithium ions can be reversibly intercalated and disintercalated by application of electric potential in an electrolyte solution are used. As the electrode active materials, inorganic compounds may be used, and organic compounds may also be used.

The positive electrode active materials are roughly classified into those made of inorganic compounds and those made of organic compounds. Examples of the positive electrode active materials made of inorganic compounds may include transition metal oxide, complex oxide of lithium and transition metal, and transition metal sulfide. As the transition metals, Fe, Co, Ni, Mn, etc. are used. Specific examples of the inorganic compounds used for the positive electrode active material may include lithium-containing complex metal oxides such as LiCoO₂, LiNiO₂, LiMnO₂, LiMn_{2O4}, LiFePO₄, and LiFeVO₄; transition metal sulfides such as TiS₂, TiS₃, and amorphous MoS₂; transition metal oxides such as Cu₂V₂O₃, amorphous V₂O-P₂O₅, MoO₃, V₂O₅, and V₆O₁₃. On the other hand, examples of the positive electrode active materials made of organic compounds may include conductive polymers such as polyacethylene and poly-p-phenylene.

Furthermore, positive electrode active materials made of a composite material that is a combination of an inorganic compound and an organic compound may also be used. For example, iron-based oxides are subjected to reduction firing in the presence of carbon source materials to produce composite materials covered with carbon materials, and these composite materials may be used as the positive electrode active material. Iron-based oxides tend to have low electrical conductivity. However, by forming the aforementioned composite materials, the resultant can be used as a positive electrode active material having high performance. Materials obtained by partial element substitution of the aforementioned compounds may also be used as the positive electrode active material.

As these positive electrode active materials, one species thereof may be solely used, or two or more species thereof may be used in combination at any ratio. Furthermore, a mixture of the aforementioned inorganic compound and organic compound may also be used as the positive electrode active material.

The particle diameter of the positive electrode active material is appropriately selected in accordance with balance with other constituents of the battery. In view of improvements in battery properties such as load property and cycle property, the volume average diameter D50 is usually 0.1 µm or larger and preferably 1 µm or larger, and is usually 50 µm or smaller and preferably 20 µm or smaller. When the volume average diameter D50 falls within this range, a secondary battery having large charge/discharge capacity can be obtained, and handling during production of a mixture slurry and an electrode can be facilitated.

Examples of the negative electrode active materials may include carbonaceous materials such as amorphous carbon, graphite, natural graphite, mesocarbon microbeads, and pitch-based carbon fiber; and conductive polymers such as polyacene. Examples may also include metals such as silicon, tin, zinc, manganese, iron, and nickel, and alloys thereof; oxides of these metals and alloys; and sulfates of these metals and alloys. In addition, metal lithium; lithium alloys such as Li-Al, Li-Bi-Cd, and Li-Sn-Cd; lithium transition metal nitrides; silicon, etc. may also be used. As the electrode active material, a material having a surface to which adhesion of a conductivity imparting material is effected by mechanical modification may also be used. As these negative electrode active materials, one species thereof may be solely used, or two or more species thereof may be used in combination at any ratio.

The particle diameter of the negative electrode active material is appropriately selected in accordance with balance with other constituents of the battery. In view of improvements in battery properties such as initial efficiency, load property, and cycle property, the volume average diameter D50 is usually 1 µm or larger and preferably 15 µm or larger, and is usually 50 µm or smaller and preferably 30 µm or smaller.

### [Binding Agent for Electrode Material Layer]

It is preferable that the electrode material layer includes a binding agent for an electrode material layer in addition to the electrode active material. By containing the binding agent for an electrode material layer, the binding property of the electrode material layer in the electrode can be improved, and the strength against mechanical force that are applied in, e.g., a winding process of the electrode can be improved. In addition, detachment of the electrode material layer in the electrode is suppressed. Therefore, the risk of short circuit caused by the detached object is reduced.

As the binding agent for an electrode material layer, a variety of polymer components may be used. For example, polyethylene, polytetrafluoroethylene (PTFE), polyvinylidene fluoride (PVDF), a tetrafluoroethylene-hexafluoropropylene copolymer (FEP), polyacrylic acid derivatives, polyacrylonitrile derivatives, etc. may be used.

Further, soft polymer exemplified below may also be used as the binding agent for an electrode material layer. That is, examples of the soft polymers may include:
(i) acrylic soft polymers which are homopolymers of derivatives of acrylic acid or methacrylic acid, or copolymers of the derivatives and a monomer copolymerizable therewith such as polybutyl acrylate, polybutyl methacrylate, polyhydroxyethyl methacrylate, polyacrylamide, polyacrylonitrile, a butyl acrylate-styrene copolymer, a butyl acrylate-acrylonitrile copolymer and a butyl acrylate-acrylonitrile-glycidyl methacrylate copolymer;
(ii) isobutylene-based soft polymers such as polyisobutylene, isobutylene-isoprene rubber and an isobutylene-styrene copolymer;
(iii) diene-based soft polymers such as polybutadiene, polyisoprene, a butadiene-styrene random copolymer, an isoprene-styrene random copolymer, an acrylonitrile-butadiene copolymer, an acrylonitrile-butadiene-styrene copolymer, a butadiene-styrene block copolymer, a styrenebutadiene-styrene block copolymer, an isoprene-styrene block copolymer, and a styrene-isoprene-styrene block copolymer;
(iv) silicon-containing soft polymers such as dimethyl polysiloxane, diphenyl polysiloxane, and dihydroxy polysiloxane;
(v) olefin-based soft polymers such as liquid polyethylene, polypropylene, poly-1-butene, an ethylene-α-olefin copolymer, a propylene-α-olefin copolymer, an ethylene-propylene-diene copolymer (EPDM), and an ethylene-propylene-styrene copolymer;
(vi) vinyl-based soft polymers such as polyvinyl alcohol, polyvinyl acetate, polyvinyl stearate, and a vinyl acetate-styrene copolymer;
(vii) epoxy-based soft polymers such as polyethylene oxide, polypropylene oxide, and epichlorhydrin rubber;
(viii) fluorine-containing soft polymers such as vinylidene fluoride-based rubber and tetrafluoroethylene-propylene rubber; and
(ix) other soft polymers such as natural rubbers, polypeptides, proteins, polyester-based thermoplastic elastomers, vinyl chloride-based thermoplastic elastomers, and polyamide-based thermoplastic elastomers. These soft polymers may have a crosslinked structure, or may have a functional group introduced by modification.

As the binding agents for an electrode material layer, one species thereof may be solely used, or two or more species thereof may be used in combination at any ratio.

The amount of the binding agent for an electrode mixture in the electrode material layer is preferably 0.1 parts by weight or more, more preferably 0.2 parts by weight or more, and particularly preferably 0.5 parts by weight or more, and is preferably 5 parts by weight or less, more preferably 4 parts by weight or less, and particularly preferably 3 parts by weight or less, based on 100 parts by weight of the electrode active material. When the amount of the binding agent for an electrode material layer falls within the aforementioned range, the electrode active material can be prevented from detaching from the electrode without inhibition of a battery reaction.

The binding agent for an electrode material layer is usually prepared as a solution or a dispersion liquid for producing the electrode. The viscosity of the dispersion liquid in this case is usually 1 mPa·s or higher and preferably 50 mPa·s or higher, and is usually 300,000 mPa·s or lower and preferably 10,000 mPa·s or lower. The viscosity is a value measured at 25 °C and a rotation speed of 60 rpm with a B-type viscometer.

### (Optional Components which May be Contained in Electrode Material Layer)

The electrode material layer may contain optional components in addition to the electrode active material and the binding agent for an electrode material layer so long as the effects of the present invention are not significantly impaired. Examples of the optional components may include conductivity imparting materials (may also referred to as a conductive agent) and reinforcing materials. As the optional components, one species thereof may be solely used, or two or more species thereof may be used in combination at any ratio.

Examples of the conductivity imparting materials may include conductive carbons such as acetylene black, Ketjen black, carbon black, graphite, vapor-grown carbon fiber, and carbon nanotube; carbon powders such as black lead; and fiber and foil of a variety of metals. When the conductivity-imparting material is used, electric contact between the electrode active materials can be improved. In particular, when the material is used in the lithium ion secondary battery, the discharge rate property can thereby be improved. For further improving such effects, acetylene black is particularly preferable as the conductivity imparting agent among the aforementioned examples.

As the reinforcing material, a variety of inorganic or organic spherical, plate-shaped, rod-shaped, or fibrous fillers may be used.

The amount of each of the conductivity imparting agent and the reinforcing agent is usually 0 part by weight or more and preferably 1 part by weight or more, and each are usually 20 parts by weight or less and preferably 10 parts by weight or less, based on 100 parts by weight of the electrode active material.

### (Mixture Slurry)

The electrode material layer is usually produced by effecting adhesion to the current collector a slurry containing the electrode active material and the solvent, and, if necessary, the binding agent for an electrode material layer and the optional components (it will be appropriately referred to hereinbelow as a "mixture slurry"). When the electrode material layer contains the binding agent for an electrode material layer, the solvent for use may be a solvent in which the binding agent for an electrode material layer can be dissolved or dispersed in a form of particles. A solvent in which the binding agent can be dissolved is preferable. When a solvent in which the binding agent for an electrode material layer can be dissolved is used, adsorption of the binding agent for an electrode material layer on the surface of the electrode active material, etc. occurs, to thereby stabilize dispersion thereof.

The mixture slurry usually contains a solvent, in which the electrode active material, the binding agent for an electrode material layer, the optional components, etc. are dissolved or dispersed. As the solvent, a solvent in which the binding agent for an electrode material layer can be dissolved is preferably used, since thereby the electrode active material and the conductivity-imparting material are well dispersed. It can be presumed that, by using the binding agent for an electrode material layer in the state of being dissolved in the solvent, the binding agent for an electrode material layer is adsorbed on the surfaces of the electrode active material, etc. to stabilize the dispersion by the volume effect thereof.

As the solvents for the mixture slurry, both water and organic solvents may be used. Examples of the organic solvents may include alicyclic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, and ε-caprolactone; acylonitriles such as acetonitrile and propionitrile; ethers such as tetrahydrofuran and ethylene glycol diethyl ether; alcohols such as methanol, ethanol, isopropanol, ethylene glycol, and ethylene glycol monomethyl ether; and amides such as N-methylpyrrolidone and N,N-dimethylformamide. As these solvents, one species thereof may be solely used, or two or more species thereof may be used in combination at any ratio. It is preferable to appropriately select the specific type of the solvent in view of drying speed and environmental issues. In particular, non-aqueous solvents are preferably used in view of swelling property of the electrode in water.

The mixture slurry may further contain additives exhibiting a variety of functions such as a thickener. As the thickener, polymers soluble in the organic solvent used for the mixture slurry are usually used. Specific examples thereof may include acrylonitrile-butadiene copolymer hydrides.

The mixture slurry may further contain, e.g., trifluoropropylene carbonate, vinylene carbonate, catechol carbonate, 1,6-dioxaspiro[4,4]nonane-2,7-dione, and 12-crown-4-ether in order to increase the stability and the lifetime of the battery. These may be contained in the electrolyte solution.

The amount of the solvent in the mixture slurry is adjusted before use so as to obtain a viscosity suitable for coating in accordance with the types of the electrode active material, the binding agent for an electrode material layer, etc. Specifically, the concentration of the solid content including the electrode active material, the binding agent for an electrode material layer, and the optional components is adjusted to the amount of preferably 30% by weight or more and more preferably 40% by weight or more, and of preferably 90% by weight or less and more preferably 80% by weight or less before use.

The mixture slurry is obtained by mixing using a mixer the electrode active material and the solvent, and, if necessary, the binding agent for an electrode material layer and the optional components. The aforementioned components may be simultaneously supplied into the mixer for mixing. When the electrode active material, the binding agent for an electrode material layer, the conductivity-imparting material, and the thickener are used as constituents of the mixture slurry, it is preferable to mix the conductivity-imparting material and the thickener in the solvent to disperse the conductive material in a particulate form, and subsequently mix the binding agent for an electrode material layer and the electrode active material, in terms of improvement in dispersibility of the slurry. As the mixer, a ball mill, a sand mill, a pigment disperser, a grinding machine, an ultrasonic disperser, a homogenizer, a planetary mixer, a Hobart mixer, etc. may be used. The ball mill is preferably used because it can suppress aggregation of the conductivity-imparting material and the electrode active material.

The particle size of the mixture slurry is preferably 35 µm or smaller, more preferably 25 µm or smaller. When the particle size of the slurry falls within the aforementioned range, high dispersion of the conductive material can be achieved and a uniform electrode can thereby obtained.

### (Method for Producing Electrode Material Layer)

The electrode material layer may be produced by, e.g., binding electrode material layer(s) in a form of a layer to at least one surface, preferably to both surfaces of the current collector in a layered manner. As a specific example, the electrode material layer may be produced by applying the mixture slurry onto the current collector, drying the slurry, and then heating at 120°C or higher for one hour or longer.

Examples of the method for applying the mixture slurry onto the current collector may include a doctor blade method, a dipping method, a reverse roll method, a direct roll method, a gravure method, an extrusion method, and a brush coating method. Examples of the drying method may include drying with hot air, warm air, and low humid air, vacuum drying, and drying methods by irradiation with (far-)infrared rays, electron beams, etc.

It is preferable that the electrode material layer is subsequently subjected to a pressure treatment using, e.g., metal mold press and roll press. The pressure treatment can reduce the void ratio of the electrode material layer. The void ratio is preferably 5% or more and more preferably 7% or more, and is preferably 15% or less and more preferably 13% or less. An excessively low void ratio results in difficulty in obtaining high volume capacity, and the electrode material layer's tendency to be separated to cause a defect. An excessively high void ratio may deteriorate charging efficiency and discharging efficiency.

When a curable polymer is used as the binding agent for an electrode material layer, it is preferable to cure the binding agent for an electrode material layer at a suitable time after applying the mixture slurry.

Both for the positive electrode and the negative electrode, the thickness of the electrode material layer is usually 5 µm or more and preferably 10 µm or more, and is usually 300 µm or less and preferably 250 µm or less.

### [2-3. Other Components]

The electrode may include constituents other than the current collector and the electrode material layer, so long as the effects of the present invention are not significantly impaired.

### [3. Separator for Secondary Battery]

The separator of the present invention (separator for a secondary battery) includes an organic separator and the porous membrane according to the present invention formed on the surface of the organic separator. Even if the separator includes the porous membrane according to the present invention, the electrolyte solution can permeate the porous membrane according to the present invention and thus the porous membrane according to the present invention does not cause adverse effect on rate property, etc. In addition, the porous membrane according to the present invention does not curl even when transferred to a dry room, so that deformation of the separator according to the present invention can also be prevented.

Generally, a separator is a member provided between a positive electrode and a negative electrode for preventing short circuit of the electrodes. As the separator, e.g., a porous substrate having micropores is used. Usually, a porous substrate made of an organic material (i.e., an organic separator) is used. Examples of the organic separator may include micropore films and nonwoven fabrics that contain polyolefin resins such as polyethylene and polypropylene, aromatic polyamide resins, etc.

The thickness of the organic separator is usually 0.5 µm or more and preferably 1 µm or more, and is usually 40 µm or less, preferably 30 µm or less, and more preferably 10 µm or less. When the thickness falls within this range, the resistance of the separator in the battery is reduced, and good workability can be obtained during the production of the battery.

The separator according to the present invention includes the porous membrane according to the present invention on the surface of the organic separator. As a method for providing the porous membrane according to the present invention on the organic separator, e.g., the method for producing the porous membrane according to the present invention may be carried out using the organic separator as a coating subject substrate. Examples of specific methods may include:
1) a method in which the slurry composition for a porous membrane is applied onto the surface of the organic separator and then the slurry composition is dried;
2) a method in which the organic separator is immersed in the slurry composition for a porous membrane and then the organic separator is dried; and
3) a method in which the slurry composition for a porous membrane is applied onto a release film, then the slurry composition is dried to produce the porous membrane according to the present invention, and then the porous membrane according to the present invention thus obtained is transferred to the surface of the organic separator. Of these, the method 1) is particularly preferable because thereby the thickness of the porous membrane according to the present invention can be easily controlled.

The separator of the present invention may include constituents other than the organic separator and the porous membrane according to the present invention so long as the effects of the present invention are not significantly impaired. For example, another layer may be further provided on the surface of the porous membrane according to the present invention.

### [4. Secondary Battery]

The secondary battery of the present invention includes a positive electrode, a negative electrode, and an electrolyte solution, and further includes the separator of the present invention as a separator.

### [4-1. Electrolyte Solution]

As the electrolyte solution, an organic electrolyte solution obtained by dissolving a supporting electrolyte in an organic solvent is usually used. As the supporting electrolyte, e.g., a lithium salt is used. Examples of the lithium salt may include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂) 2NLi, and (C₂F₅SO₂)NLi. Of these, LiPF₆, LiClO₄, and CF₃SO₃Li are preferable because of high solubility in solvents and high dissociation degree. As the electrolytes, one species thereof may be solely used, or two or more species thereof may be used in combination at any ratio. Usually, there is a tendency that use of a supporting electrolyte with higher dissociation degree gives higher lithium-ion conductivity, and therefore the lithium-ion conductivity may be controlled by selecting the type of the supporting electrolyte.

As organic solvents used for the electrolyte solution, those in which the supporting electrolyte can be dissolved may be used. Preferable examples for use may include carbonates such as dimethyl carbonate (DMC), ethylene carbonate (EC), diethyl carbonate (DEC), propylene carbonate (PC), butylene carbonate (BC), and methylethyl carbonate (MEC); esters such as γ-butyrolactone and methyl formate; ethers such as 1,2-dimethoxyethane and tetrahydrofuran; and sulfur-containing compounds such as sulfolane and dimethyl sulfoxide. Furthermore, mixtures of these solvents may also be used. Of these, carbonates are preferable because of high permittivity and a wide, stable electropotential range. Usually, there is a tendency that use of a solvent having lower viscosity gives higher lithium-ion conductivity, and therefore the lithium-ion conductivity can be controlled by selecting the type of the solvent.

The concentration of the supporting electrolyte in the electrolyte solution is usually 1% by weight or more and preferably 5% by weight or more, and is usually 30% by weight or less and preferably 20% by weight or less. The supporting electrolyte may be usually used at a concentration of 0.5 mol/L to 2.5 mol/L depending on the type of the supporting electrolyte. If the concentration of the supporting electrolyte is either too low or too high, the ion conductivity tends to decrease. Usually, lower concentration of the electrolyte solution gives polymer particles such as the binding agent for an electrode material layer have higher swelling degree, and therefore the lithium-ion conductivity can be controlled by controlling the concentration of the electrolyte solution.

Furthermore, if necessary, the electrolyte solution may contain an additive, etc.

### [4-2. Method for Producing Secondary Battery]

Examples of the method for producing the secondary battery of the present invention may include a method in which the positive electrode and the negative electrode are stacked with the separator interposed therebetween, the stacked layers are then wound or folded in accordance with a battery shape and then put into a battery container, then the electrolyte solution is poured into the battery container, and the battery container is sealed. If necessary, it is possible to incorporate thereinto overcurrent protection elements such as a fuse and a PTC element, and a lead plate, expanded metal, etc. for preventing overcharging/overdischarging and pressure increase in the battery. The shape of the battery may be any of a coin type, a button type, a sheet type, a cylindrical type, a rectangular type, a flat type, etc.

### [Examples]

The present invention will be specifically described hereinbelow with reference to Examples, but the present invention is not limited to the following Examples and may be implemented with any modification without departing from the scope of the claims and equivalents thereto. In the following description, "%" and "part" expressing the amount are on a weight basis unless otherwise specified. In addition, the following procedures were carried out under the conditions of ordinary temperature and ordinary pressure unless otherwise specified.

### [Evaluation Method]

### [Measurement of Viscosity of 1% by Weight Aqueous Solution]

The viscosity of a 1% by weight aqueous solution of a water-soluble polymer at 25°C was measured using a B-type viscometer (at 60 rpm).

### [Peel Strength Test]

A separator (organic separator with a porous membrane) was cut into a rectangular shape of 100 mm long and 10 mm wide, to produce a test piece. A cellophane tape (defined in JIS Z 1522) was fixed on a test stand with the adhesive side of the cellophane tape facing upward. The test piece was stuck on the cellophane tape with the side on which the porous membrane was formed facing downward. The stress generated when the organic separator was removed by vertically pulling an end thereof at a tensile speed of 50 mm/min was measured. This measurement repeated 3 times and the average was obtained and taken as peel strength. The peel strength was rated in accordance with the following criteria. Larger peel strength is indicative of larger binding strength of the porous membrane to the organic separator. That is, larger peel strength is indicative of larger adhesion strength.
A: The peel strength was 70 N/m or more.
B: The peel strength was 55 N/m or more and less than
70 N/m.
C: The peel strength was 40 N/m or more and less than 55 N/m.
D: The peel strength was 25 N/m or more and less than 40 N/m.
E: The peel strength was less than 25 N/m.

### [Moisture amount of Porous Membrane]

A separator (organic separator with the porous membrane) is cut into 10 cm wide x 10 cm long, to produce a test piece. The test piece is allowed to stand at a temperature of 25°C and a humidity of 50% for 24 hours. Subsequently, the moisture amount of the test piece is measured using a coulometric moisture titrator in accordance with the Karl Fischer method (JIS K-0068 (2001), water evaporation method, vaporization temperature: 150°C). This moisture amount is defined as "W1".

Subsequently, the moisture amount of the test piece which has been allowed to stand at a temperature of 25°C, a dew point of -60°C, and a humidity of 0.05% for 24 hours is measured in the same manner as described above. This moisture amount is defined as "W2".

The ratio of the moisture amount "W1/W2" is calculated from the measured moisture amounts "W1" and "W2" and rated. Smaller value of ratio "W1/W2" is indicative of smaller moisture amount of the porous membrane, with which it is possible to realize better suppression of curling of the separator in a dry room for producing the battery. Smaller moisture amount in the porous membrane is preferable because therewith side reaction in the battery due to moisture and decrease in battery properties are suppressed.
A: The W1/W2 is 2.0 or less.
B: The W1/W2 is more than 2.0 and less than 2.5.
C: The W1/W2 is 2.5 or more and less than 3.0.
D: The W1/W2 is 3.0 or more.

### [Curling Measurement]

A separator (organic separator with a porous membrane) is cut into 5 cm wide × 5 cm long, to produce a test piece. Subsequently, the test piece is allowed to stand at a temperature of 25°C and a dew point of -60°C or less for 24 hours or more. Height of the edge portion elevation caused by the curling of the sample is measured and rated in accordance with the following criteria. Lower edge height is preferable because it is indicative of smaller curling.
A: The edge height is less than 0.5 cm.
B: The edge height is 0.5 cm or more and less than 1.0 cm.
C: The edge height is 1.0 cm or more.

### [Increasing ratio in Gurley Value]

The Gurley value (sec/100cc) of a separator (organic separator with a porous membrane) is measured using a Gurley measuring device (produced by Kumagaya Riki Kogyo Co., Ltd., Smooth & porosity meter, measurement diameter: φ 2.9 cm). From this measurement, the increasing ratio in the Gurley value by providing the porous membrane from the value of the original substrate (separator) is obtained, and the increasing ratio is rated in accordance with the following criteria. Smaller increasing ratio in the Gurley value is indicative of better permeability of ions and better rate property in the battery.

SA: The increasing ratio in the Gurley value is less than 4%.
A: The increasing ratio in the Gurley value is 4% or more and less than 8%.
B: The increasing ratio in the Gurley value is 8% or more and less than 12%.
C: The increasing ratio in the Gurley value is 12% or more and less than 16%.
D: The increasing ratio in the Gurley value is 16% or more and less than 20%.
E: The increasing ratio in the Gurley value is 20% or more.

### [High Temperature Cycle Property of Battery]

10 full-cell coin-type battery cells were repeatedly charged and discharged by a 0.2 C constant current process under an atmosphere of 60°C wherein charging was performed to 4.2 V and discharging was performed to 3.0 V, and the discharge capacity was measured. An average value of 10 cells is taken as a measured value. The charge/discharge capacity retention ratio represented by a ratio (%) of the discharge capacity after 50 cycles with respect to the discharge capacity after 5 cycles was calculated. This ratio is used as an evaluation criterion for cycle property, and rated as follows. Higher value of this measurement is indicative of better high temperature cycle property.

SA: The charge/discharge capacity retention ratio is 80% or more.
A: The charge/discharge capacity retention ratio is 70% or more and less than 80%.
B: The charge/discharge capacity retention ratio is 60% or more and less than 70%.
C: The charge/discharge capacity retention ratio is 50% or more and less than 60%.
D: The charge/discharge capacity retention ratio is 40% or more and less than 50%.
E: The charge/discharge capacity retention ratio is 30% or more and less than 40%.
F: The charge/discharge capacity retention ratio is less than 30%.

### [Rate Property of Battery]

10 full-cell coin-type battery cells were used to run a charge/discharge cycle wherein cells were charged to 4.2 V at a 0.1 C constant current and discharged to 3.0 V at a 0.1 C constant current at 25°C, and a charge/discharge cycle wherein cells were charged to 4.2 V at a 0.1 C constant current and discharged to 3.0 V at a 1.0 C constant current at 25°C. The ratio of the discharge capacity at 1.0 C with respect to the discharge capacity at 0.1 C was calculated in percentage to give charge/discharge rate property, and they were rated in accordance with the following criteria. Larger value of this measurement is indicative of lower internal resistance, which realizes quick charging and discharging.

SA: The charge/discharge rate property is 80% or more.
A: The charge/discharge rate property is 75% or more and less than 80%.
B: The charge/discharge rate property is 70% or more and less than 75%.
C: The charge/discharge rate property is 65% or more and less than 70%.
D: The charge/discharge rate property is 60% or more and less than 65%.
E: The charge/discharge rate property is 55% or more and less than 60%.
F: The charge/discharge rate property is less than 55%.

### [Example 1]

### (Production of Water-Soluble Polymer)

In a 5 MPa pressure-resistant container equipped with a stirrer, 67.5 parts of ethyl acrylate as a (meth)acrylic acid ester monomer, 30 parts of methacrylic acid as an ethylenically unsaturated carboxylic acid monomer, 2.5 parts of trifluoromethyl methacrylate as a fluorine-containing (meth)acrylic acid ester monomer, 1.0 part of sodium dodecylbenzenesulfonate as an emulsifier, 150 parts of ion exchange water, and 0.5 parts of potassium persulfate as a polymerization initiator were placed, stirred well, and then heated to 60°C to initiate polymerization. When the polymerization conversion rate reached 96%, the resultant was cooled to stop the reaction, thereby providing an aqueous solution containing a water-soluble polymer. To the aqueous solution containing a water-soluble polymer thus obtained, 10% aqueous ammonia was added to adjust pH to 8, thereby providing an aqueous solution containing a desired water-soluble polymer. The weight average molecular weight of the obtained water-soluble polymer was measured and found to be 128,000.

Using the aqueous solution containing the water-soluble polymer thus obtained, a 1% aqueous solution of the water-soluble polymer was prepared in the aforementioned manner and the viscosity thereof was measured. The results are shown in Table 1.

### (Production of Binding Agent for Porous Membrane)

To a reactor equipped with a stirrer, 70 parts of ion exchange water, 0.15 parts of sodium laurylsulfate (produced by Kao Chemicals, product name: "Aimard 2F") as an emulsifier, and 0.5 parts of ammonium persulfate were each supplied, and a gas phase portion was substituted with nitrogen gas. Then the mixture was heated to 60 °C.

Meanwhile, in an another container, 50 parts of ion exchange water, 0.5 parts of sodium dodecylbenzenesulfonate; 94.8 parts of butyl acrylate (BA), 2 parts of acrylonitrile (AN), and 2 parts of methacrylic acid as polymerizable monomers; and 1.2 parts of N-methylolacrylamide and 1 part of allyl glycidyl ether (AGE) as crosslinkable monomers were mixed to provide a monomer mixture. This monomer mixture was continuously added to the reactor over four hours to perform polymerization. During the addition of the monomer mixture, the reaction was performed at 60 °C. After the addition of the monomer mixture was completed, the monomer mixture was further stirred at 70 °C for three hours and the reaction was terminated, producing an aqueous dispersion liquid containing a water-insoluble particle polymer as a binding agent for a porous membrane.

In the water-insoluble particle polymer thus obtained, the weight ratio expressed by "(meth)acrylonitrile monomer unit / (meth)acrylic acid ester monomer unit" was 2/94.8. The amount of the crosslinkable monomer unit was 2.3 parts by weight based on 100 parts by weight of the total amount of the (meth)acrylonitrile monomer unit and the (meth)acrylic acid ester monomer unit. The water-insoluble particle polymer 1 had a volume average particle diameter of 360 nm and a glass transition temperature of -45°C.

### (Production of Slurry Composition for Porous Membrane)

Alumina particles (AKP-3000 produced by Sumitomo Chemical Co., Ltd., volume average particle diameter D50 = 0.45 µm, tetrapod-shaped particles) were prepared as non-conductive particles. 100 parts of these non-conductive particles, 2.5 parts of a water-soluble polymer, and 4 parts of a water-insoluble particle polymer were mixed, and water was further mixed such that the solid content concentration was 40%, to produce a slurry composition for a porous membrane.

### (Production of Separator)

An organic separator of a porous substrate made of polypropylene (produced by Celgard, product name: 2500, thickness: 25 µm) was prepared. The slurry composition for a porous membrane was applied onto one surface of the prepared organic separator, and the slurry composition was dried at 60°C for 10 minutes. This produced a separator including a porous membrane with a thickness of 29 µm.

For the obtained separator, the peel strength, the moisture amount of the porous membrane, the curling, and the increasing ratio in the Gurley value was evaluated in the aforementioned manner. The results are shown in Table 1.

### (Production of Battery)

Using a planetary mixer, 95 parts of LiCoO₂ as a positive electrode active material, 3 parts of polyvinylidene fluoride (PVDF) as a binding agent for an electrode material layer, 2 parts of acetylene black as a conductivity-imparting agent, and N-methylpyrrolidone (NMP) as a solvent were mixed to provide a mixture slurry in a slurry form. This mixture slurry for a positive electrode was applied onto an aluminum foil having a thickness of 18 µm and dried at 120°C for 20 minutes, followed by roll press, to obtain a positive electrode having a thickness of 100 µm.

Using a planetary mixer, 98 parts of graphite having a particle diameter of 20 µm and a specific surface area of 4.2 m²/g as a negative electrode active material, 5 parts of polyvinylidene fluoride (PVDF) as a binding agent for an electrode material layer, and N-methylpyrrolidone (NMP) as a solvent were mixed to prepare a mixture slurry in a slurry form. This mixture slurry for a negative electrode was applied onto one surface of a copper foil having a thickness of 20 µm, dried at 50°C for 20 minutes, and further dried at 110°C for 20 minutes, followed by roll press, to obtain a negative electrode having a thickness of 95 µm.

The positive electrode and negative electrode were cut out in a disc shape having diameters of 13 mm and 14 mm, respectively. The separator including the porous membrane was cut into a disc shape having a diameter of 18 mm. The separator and the negative electrode were sequentially stacked on the electrode material layer side of the positive electrode such that the porous membrane of the separator faced the electrode material layer side of the negative electrode. This was placed in a coin-type outer container which was made of stainless steel and provided with a gasket made of polypropylene. An electrolyte solution (solvent: EC/DEC = 1/2, electrolyte: 1M LiPF₆) was injected into this container with no air remaining, and the outer container was covered with a stainless steel cap having a thickness of 0.2 mm via a gasket made of polypropylene and fastened to seal the battery can, thereby producing a lithium ion secondary battery having a diameter of 20 mm and a thickness of about 3.2 mm (coin cell CR2032).

The full-cell coin-type battery thus obtained was used for evaluating high temperature cycle property and rate property in the aforementioned manner. The results are shown in Table 1.

### [Example 2]

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 77.5 parts and the amount of methacrylic acid as an ethylenically unsaturated carboxylic acid monomer was changed to 20 parts. The results are shown in Table 1.

### [Example 3]

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 72.5 parts and the amount of methacrylic acid as an ethylenically unsaturated carboxylic acid monomer was changed to 25 parts. The results are shown in Table 1.

### [Example 4]

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 57.5 parts and the amount of methacrylic acid as an ethylenically unsaturated carboxylic acid monomer was changed to 40 parts. The results are shown in Table 1.

### [Example 5]

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 52.5 parts and the amount of methacrylic acid as an ethylenically unsaturated carboxylic acid monomer was changed to 45 parts. The results are shown in Table 1.

### [Example 6]

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 69 parts and the amount of trifluoromethyl methacrylate as a fluorine-containing (meth)acrylic acid ester monomer was changed to 1 part. The results are shown in Table 2.

### [Example 7]

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 65 parts and the amount of trifluoromethyl methacrylate as a fluorine-containing (meth)acrylic acid ester monomer was changed to 5 parts. The results are shown in Table 2.

### [Example 8]

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 61 parts and the amount of trifluoromethyl methacrylate as a fluorine-containing (meth)acrylic acid ester monomer was changed to 9 parts. The results are shown in Table 2.

### [Example 9]

A water-soluble polymer, a separator, and a battery were produced and each evaluated in the same manner as described in Example 1 except that, in the production of the water-soluble polymer, 2,2,2-trifluoroethyl methacrylate was used in place of trifluoromethyl methacrylate as a fluorine-containing (meth)acrylic acid ester monomer. The results are shown in Table 2.

### [Example 10]

A water-soluble polymer, a separator, and a battery were produced and each evaluated in the same manner as described in Example 1 except that, in the production of a slurry composition for a porous membrane, the amount of the water-soluble polymer was changed to 0.7 parts. The results are shown in Table 2.

### [Example 11]

A water-soluble polymer, a separator, and a battery were produced and each evaluated in the same manner as described in Example 1 except that, in the production of a slurry composition for a porous membrane, a water-insoluble particle polymer was not used. The results are shown in Table 3.

### [Example 12]

### (1-1. Production of Seed Polymer Particles A)

In a reactor equipped with a stirrer, 95.0 parts of styrene, 5.0 parts of acrylic acid, 1.0 part of sodium dodecylbenzenesulfonate, 100 parts of ion exchange water, and 0.5 parts of potassium persulfate were placed and subjected to polymerization at 80°C for eight hours.

This produced an aqueous dispersion of seed polymer particles A having a number average particle diameter of 58 nm.

### (1-2. Production of Seed Polymer Particles B)

In a reactor equipped with a stirrer, 2 parts of the aqueous dispersion of the seed polymer particles A, which was obtained in the process (1-1), based on the solid content (i.e., based on the weight of the seed polymer particles A), 0.2 parts of sodium dodecylbenzenesulfonate, 0.5 parts of potassium persulfate, and 100 parts of ion exchange water were placed and mixed to give a mixture A, and the temperature was raised to 80°C.

Meanwhile, in an another container, 82 parts of styrene, 15.3 parts of methyl methacrylate, 2.0 parts of itaconic acid, 0.7 parts of acrylamide, 0.5 parts of sodium dodecylbenzenesulfonate, and 100 parts of ion exchange water were mixed to prepare a dispersion of a monomer mixture 1. This dispersion of the monomer mixture 1 was continuously added over four hours to the mixture A obtained above, for polymerization. The temperature of the reaction system was kept at 80°C during continuous addition of the dispersion of the monomer mixture 1 to perform the reaction. After the continuous addition was completed, the reaction was further continued at 90°C for three hours.

This produced an aqueous dispersion of seed polymer particles B having a number average particle diameter of 198 nm.

### (1-3. Production of Non-Conductive Particles)

Subsequently, in a reactor equipped with a stirrer, 20 parts of the aqueous dispersion of the seed polymer particles B, which was obtained in the process (1-2), based on the solid content (i.e., based on the weight of the seed polymer particles B), 100 parts of a monomer mixture 2 (produced by Nippon Steel Chemical Co., Ltd., product name: DVB-570), 0.5 parts of sodium dodecylbenzenesulfonate, 4 parts of t-butylperoxy-2-ethylhexanoate (produced by NOF Corporation, trade name: PERBUTYL O) as a polymerization initiator, 540 parts of ion exchange water, and 60 parts of ethanol were placed and stirred at 35°C for 12 hours. This allowed the seed polymer particles B to completely absorb the monomer mixture 2 and the polymerization initiator. Subsequently, this was subjected to polymerization at 90°C for seven hours to obtain polymer particles. Then, steam was introduced thereto to remove unreacted monomers and ethanol. The monomer mixture 2 here was a mixture of divinylbenzene and ethylvinylbenzene (monomer mixture ratio: divinylbenzene/ethylvinylbenzene = 60/40).

A water-soluble polymer, a separator, and a battery were produced and each evaluated in the same manner as in Example 1 except that the polymer particles (volume average particle diameter D50 = 352 µm) produced in the above was used in place of alumina particles as non-conductive particles. The results are shown in Table 3.

### (Comparative Example 1)

A separator and a battery were produced and each evaluated in the same manner as in Example 1 except that 2 parts of carboxymethylcellulose, a cellulose-based thickener, was used in place of the water-soluble polymer. The results are shown in Table 4.

### (Comparative Example 2)

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 70 parts and a fluorine-containing (meth)acrylic acid ester monomer was not used. The results are shown in Table 4.

### (Comparative Example 3)

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 87.5 parts and the amount of methacrylic acid as an ethylenically unsaturated carboxylic acid monomer was changed to 10 parts. The results are shown in Table 4.

### (Comparative Example 4)

A water-soluble polymer, a separator, and a battery were produced and each evaluated in the same manner as described in Example 1 except that, in the production of the water-soluble polymer, the amount of ethyl acrylate as a (meth)acrylic acid ester monomer was changed to 37.5 parts and the amount of methacrylic acid as an ethylenically unsaturated carboxylic acid monomer was changed to 60 parts. The results are shown in Table 4.

### [Description of Abbreviated Expressions in Tables]

In the following tables, the meanings of abbreviated expressions are as follows.
- Amount of water-soluble polymer: the amount of the water-soluble polymer used based on 100 parts by weight of the non-conductive particles
- Viscosity of 1% aqueous solution: the viscosity of the 1% aqueous solution of the water-soluble polymer
- Amount of thickener: the amount of the cellulose-based thickener used based on 100 parts by weight of the non-conductive particles
- Combination of monomers: the combination of the (meth)acrylonitrile monomer and the (meth)acrylic acid ester monomer
- Weight ratio of monomer unit: the weight ratio expressed by "(meth)acrylonitrile monomer unit / (meth)acrylic acid ester monomer unit"
- Amount of crosslinkable monomer unit: the amount of the crosslinkable monomer unit based on 100 parts by weight of the total amount of the (meth)acrylonitrile monomer unit and the (meth)acrylic acid ester monomer unit

**[Table 1.Results of Examples 1-5]**

| | | Ex. 1 | Ex. 2 | Ex. 3 | Ex. 4 | Ex. 5 |
|---|---|---|---|---|---|---|
| Non-conductive particle | Type | Alumina | Alumina | Alumina | Alumina | Alumina |
| Water-soluble polymer | Amount of ethylenically unsaturated carboxylic acid monomer (parts) | 30 | 20 | 25 | 40 | 45 |
| | Amount of (methacrylic acid ester monomer (parts) | 67.5 | 77.5 | 72.5 | 57.5 | 52.5 |
| | Amount of fluorine-containing (meth) acrylic acid ester monomer (parts) | 2.5 | 2.5 | 2.5 | 2.5 | 2.5 |
| | Type of fluorine-containing (meth)acrylic acid ester monomer | Trifluoro methyl acrylate | Trifluoro methyl acrylate | Trifluoro methyl acrylate | Trifluoro methyl acrylate | Trifluoro methyl acrylate |
| | Glass transition temperature (°C) | -23 | -39 | -31 | -5 | 5 |
| | Amount of water-soluble polymer (parts) | 2.5 | 2.5 | 2.5 | 2.5 | 2.5 |
| | Viscosity of 1% aqueous solution (mPa•s) | 1500 | 550 | 1120 | 2340 | 2780 |
| Cellulose-based thickener | Amount of thickener (parts) | - | - | - | - | - |
| Binding agent for porous membrane | Combination of monomers | BA/AN | BA/AN | BA/AN | BA/AN | BA/AN |
| | Weight ratio of monomer unit | 2/94.8 | 2/94.8 | 2/94.8 | 2/94.8 | 2/94.8 |
| | Amount of cross linkable monomer unit (parts) | 2.3 | 2.3 | 2.3 | 2.3 | 2.3 |
| Ratio of moisture amount contained in porous membrane (W1/W2) | | 2 | 2 | 2 | 2 | 2 |
| Place at which porous membrane is provided | | Separator | Separator | Separator | Separator | Separator |
| Peel strength | | A | B | B | C | C |
| Moisture amount of porous membrane | | A | A | A | B | B |
| Curling | | A | A | A | B | B |
| Increasing ratio in Gurlev value | | A | B | A | B | B |
| High temperature cycle property | | A | A | A | A | A |
| Rate property | | A | B | A | B | B |

**[Table 2. Results of Examples 6-10]**

| | | Ex. 6 | Ex. 7 | Ex. 8 | Ex. 9 | Ex. 10 |
|---|---|---|---|---|---|---|
| Non-conductive particle | Type | Alumina | Alumina | Alumina | Alumina | Alumina |
| | Amount of ethylenically unsaturated carboxylic acid monomer (parts) | 30 | 30 | 30 | 30 | 30 |
| | Amount of (meth)acrylic acid ester monomer (parts) | 69 | 65 | 61 | 67.5 | 67.5 |
| Water-soluble polymer | Amount of fluorine-containing (meth)acrylic acid ester monomer (parts) | 1 | 5 | 9 | 2.5 | 2.5 |
| | Type of fluorine-containing (meth)acrylic acid ester monomer | Trifluoro methyl acrylate | Trifluoro methyl acrylate | Trifluoro methyl acrylate | 2,2,2-trifluoro ethyl meth acrylate | Trifluoro methyl acrylate |
| | Glass transition temperature (°C) | -24 | -21 | -19 | -23 | -23 |
| | Amount of water-soluble polymer (parts) | 2.5 | 2.5 | 2.5 | 2.5 | 0.7 |
| | Viscosity of 1% aqueous solution (mPa•s) | 1250 | 1810 | 2320 | 1500 | 1500 |
| Cellulose-based thickener | Amount of thickener (parts) | - | - | - | - | - |
| Binding agent for porous membrane | Combination of monomers | BA/AN | BA/AN | BA/AN | BA/AN | BA/AN |
| | Weight ratio of monomer unit | 2/94.8 | 2/94.8 | 2/94.8 | 2/94.8 | 2/94.8 |
| | Amount of crosslinkable monomer unit (parts) | 2.3 | 2.3 | 2.3 | 2.3 | 2.3 |
| Ratio of moisture amount contained in porous membrane (W1/W2) | | 2 | 2 | 2 | 2 | 2 |
| Place at which porous membrane is provided | | Separator | Separator | Separator | Separator | Separator |
| Peel strength | | A | B | C | B | B |
| Moisture amount of porous membrane | | B | B | B | A | A |
| Curling | | A | A | A | A | A |
| Increasing ratio in Gurlev value | | A | A | A | A | A |
| High temperature cycle property | | A | A | A | A | A |
| Rate property | | B | A | A | B | A |

**[Table 3. Results of Examples 11-12]**

| | | Ex. 11 | Ex. 12 |
|---|---|---|---|
| Non-conductive particle | Type | Alumina | Polymer particle |
| Water-soluble polymer | Amount of ethylenically unsaturated carboxylic acid monomer (parts) | 30 | 30 |
| | Amount of (meth)acrylic acid ester monomer (parts) | 67.5 | 67.5 |
| | Amount of fluorine-containing (meth)acrylic acid ester monomer (parts) | 2.5 | 2.5 |
| | Type of fluorine-containing (meth)acrylic acid ester monomer | Trifluoro methyl acrylate | Trifluoro methyl acrylate |
| | Glass transition temperature (°C) | -23 | -23 |
| | Amount of water-soluble polymer (parts) | 2.5 | 2.5 |
| | Viscosity of 1% aqueous solution (mPa•s) | 1500 | 1500 |
| Cellulo se-based thickener | Amount of thickener (parts) | - | - |
| Binding agent for porous membrane | Combination of monomers | None | BA/AN |
| | Weight ratio of monomer unit | - | 2/94.8 |
| | Amount of crosslinkable monomer unit (parts) | - | 2.3 |
| Ratio of moisture amount contained in porous membrane (W1/W2) | | 2 | 2 |
| Place at which porous membrane is provided | | Separator | Separator |
| Peel strength | | C | B |
| Moisture amount of porous membrane | | A | A |
| Curling | | A | A |
| Increasing ratio in Gurley value | | A | A |
| High temperature cycle property | | B | A |
| Rate property | | A | A |

**[Table 4. Results of Comparative Examples 1-4]**

| | | Comp. Ex. 1 | Comp. Ex. 2 | Comp. Ex. 3 | Comp. Ex. 4 |
|---|---|---|---|---|---|
| Non-conductive particle | Type | Alumina | Alumina | Alumina | Alumina |
| Water-soluble polymer | Amount of ethylenically unsaturated carboxylic acid monomer (parts) | - | 30 | 10 | 60 |
| | Amount of (meth)acrylic acid ester monomer (parts) | - | 70 | 87.5 | 37.5 |
| | Amount of fluorine-containing (meth)acrylic acid ester monomer (parts) | - | 0 | 2.5 | 2.5 |
| | Type of fluorine-containing (meth)acrylic acid ester monomer | - | - | Trifluoro methyl acrylate | Trifluoro methyl acrylate |
| | Glass transition temperature (°C) | - | -23 | -53 | 40 |
| | Amount of water-soluble polymer (parts) | - | 2.5 | 2.5 | 2.5 |
| | Viscosity of 1% aqueous solution (mPa•s) | 20 | 1800 | 15 | 5400 |
| Cellulose-based thickener | Amount of thickener (parts) | 2 | - | - | - |
| Binding agent for porous membrane | Combination of monomers | BA/AN | BA/AN | BA/AN | BA/AN |
| | Weight ratio of monomer unit | 2/94.8 | 2/94.8 | 2/94.8 | 2/94.8 |
| | Amount of crosslinkable monomer unit (parts) | 2.3 | 2.3 | 2.3 | 2.3 |
| Ratio of moisture amount contained in porous membrane (W1/W2) | | 3 | 2 | 2 | 2.3 |
| Place at which porous membrane is provided | | Separator | Separator | Separator | Separator |
| Peel strength | | A | C | D | D |
| Moisture amount of porous membrane | | D | A | A | B |
| Curling | | C | A | A | A |
| Increasing ratio in Gurley value | | B | B | B | A |
| High temperature cycle property | | B | A | A | A |
| Rate property | | B | C | A | A |

### [Discussion]

As seen from Tables 1 to 4, the porous membranes produced using the water-soluble polymer according to the present invention have low tendency to cause curling when transferred to the dry room, and have excellent adhesion strength to the organic separator. The adhesion strength is significantly high when the porous membrane contains the binding agent. When the separator or the electrode is provided with this porous membrane, high temperature cycle property and rate property of the secondary battery can be improved.

## Claims

1. A porous membrane for a secondary battery, comprising non-conductive particles and a water-soluble polymer, wherein
the water-soluble polymer is a copolymer including 15% to 50% by weight of an ethylenically unsaturated carboxylic acid monomer unit, 30% to 80% by weight of a (meth)acrylic acid ester monomer unit, and 0.5% to 10% by weight of a fluorine-containing (meth)acrylic acid ester monomer unit.

2. The porous membrane for a secondary battery according to claim 1, wherein
a moisture amount "W1" of the porous membrane when the porous membrane is stored in a constant-temperature constant-humidity chamber (temperature: 25°C, humidity: 50%) for a day and
a moisture amount "W2" of the porous membrane when the porous membrane is stored in a dry room (dew point: -60°C, humidity: 0.05%) for a day
satisfy a relationship of W1/W2 ≤ 2.5.

3. The porous membrane for a secondary battery according to claim 1, further comprising a binding agent having a glass transition temperature of -50°C to -20°C.

4. The porous membrane for a secondary battery according to claim 3, wherein the binding agent is a copolymer including a (meth)acrylonitrile monomer unit and a (meth)acrylic acid ester monomer unit.

5. The porous membrane for a secondary battery according to claim 4, wherein a weight ratio represented by " the (meth)acrylonitrile monomer unit / the (meth)acrylic acid ester monomer unit" of the copolymer included in the binding agent is from 1/99 to 30/70.

6. The porous membrane for a secondary battery according to claim 1, wherein the ethylenically unsaturated carboxylic acid monomer of the water-soluble polymer is an ethylenically unsaturated monocarboxylic acid monomer.

7. The porous membrane for a secondary battery according to claim 1, wherein a 1% by weight aqueous solution of the water-soluble polymer has a viscosity of 0.1 mPa•s to 20, 000 mPa•s.

8. A separator for a secondary battery, comprising:
an organic separator; and
the porous membrane according to claim 1, formed on a surface of the organic separator.

9. A secondary battery comprising a positive electrode, a negative electrode, a separator, and an electrolyte solution, wherein
the separator is the separator for a secondary battery according to claim 8.
